# EUROPEAN PATENT APPLICATION

(11) **EP 4 332 695 A1**
(43) Date of publication of application: **06.03.2024**
(21) Application number: 22827103.7
(22) Date of filing: 30.03.2022
(51) Int. Cl.: G05B 15/02

(54) **SMART HOME DEVICE CONTROL METHOD AND SYSTEM**

(30) Priority: 21.06.2021 CN 202110685507
(71) Applicant: Huawei Technologies Co., Ltd., Shenzhen, Guangdong 518129 (CN)
(72) Inventor: GAO, Xiaoqiang, Shenzhen, Guangdong 518129 (CN); CHEN, Zhili, Shenzhen, Guangdong 518129 (CN)
(74) Representative: Pfenning, Meinig & Partner mbB
(86) International application number: PCT/CN2022/084075
(87) International publication number: WO 2022/267598

(57) **Abstract**

A smart home control method and system are disclosed. The smart home system includes a second electronic device, a smart device, and a server. The smart device and the second electronic device are located in one local area network, and the smart device is registered with the second electronic device. After a first electronic device on which a client to which a user logs in by using an account of the user is located performs short-range communication with the second electronic device in the smart home system, the second electronic device may be automatically bound to the account of the user, so that the user can control the second electronic device and the smart device registered with the second electronic device.

## Description

This application claims priority to Chinese Patent Application No. 202110685507.5, filed with the China National Intellectual Property Administration on June 21, 2021 and entitled "SMART HOME APPLIANCE CONTROL METHOD AND SYSTEM", which is incorporated herein by reference in its entirety.

### TECHNICAL FIELD

This application relates to the field of smart home technologies, and in particular, to a smart home control method and system.

### BACKGROUND

With popularization of smart home appliances, smart devices are increasingly widely used in hotels. A smart home appliance management solution in a home scenario is mature. However, a smart home appliance management requirement in a hotel scenario is significantly different from that in the home scenario. Consequently, some scenario requirements in the hotel scenario cannot be met in a current mainstream management solution. For example, in the hotel scenario, a user bound to a device changes frequently and different users are bound in different periods. However, in the home scenario, a user bound to a device is fixed and basically remains unchanged. Therefore, how to provide a secure and ease-of-use technical solution for controlling a smart home appliance in the hotel scenario is a technical problem that urgently needs to be resolved currently.

### SUMMARY

To resolve the foregoing technical problem, this application provides a smart home appliance control method, a first electronic device, a second electronic device, a server, a computer-readable storage medium, and a computer program product. In technical solutions provided in this application, whole-house devices can be automatically bound through only one operation, or even no operation, performed by a user. This significantly improves user experience.

According to a first aspect, a smart home control method is provided. The method is applied to a first electronic device. A client is configured on the first electronic device. A first account is logged in to the client. The client corresponds to a server. The method may include: The first electronic device performs short-range communication with a second electronic device, and obtains first information related to the second electronic device from the second electronic device, where the first information includes a first identifier of the second electronic device, n smart devices are registered with the second electronic device, the second electronic device and the n smart devices are located in one local area network, and n is a positive integer greater than or equal to 1. The first electronic device sends a first message to the server, where the first message includes the first identifier, and the first message is used to obtain a first activation code representing an identity of the second electronic device. The first electronic device receives the first activation code sent by the server. The first electronic device sends a second message to the second electronic device, where the second message includes the first account, and the second message is used to request to bind the first account to the second electronic device. The first electronic device sends a fourth message to the second electronic device in response to a received third message sent by the second electronic device, where the third message includes information indicating that the second electronic device agrees to be bound, the fourth message includes the first activation code, and the fourth message indicates the second electronic device to register with the server by using the first activation code. The first electronic device receives a seventh message and a twelfth message that are sent by the server, where the seventh message includes device information of the second electronic device, the twelfth message includes device information of the n smart devices, the seventh message is sent by the server when the second electronic device is registered with the server, and the twelfth message is sent by the server when the n smart devices are registered with the server in response to a registration instruction sent by the second electronic device. The first electronic device outputs the device information of the second electronic device and the device information of the n smart devices. In this way, an account logged in to the client can be bound to the second electronic device through short-range communication between the first electronic device configured with the client and the second electronic device, so that whole-house devices can be automatically bound through only one operation, or even no operation, performed by a user. This significantly improves user experience. For example, the one operation may be understood as that the user only needs to put the first electronic device close to the second electronic device.

For example, the second electronic device may be a gateway, an electronic device integrated with a gateway function, or an electronic device not integrated with a gateway function. For example, the second electronic device may be a hub device with a gateway function, for example, a smart speaker, a smart screen, or a router.

According to the first aspect, after the first electronic device outputs the device information of the second electronic device and the device information of the n smart devices, the method may further include: The first electronic device sends device sharing information to the server in response to a received device sharing operation, where the device sharing information includes a to-be-shared account, and the device sharing information indicates the server to bind the to-be-shared account to the second electronic device. In this way, the user can share a bound device to a peer person. This improves convenience of sharing, so that the peer person can control the second electronic device and/or the smart device.

According to any one of the first aspect or the foregoing implementations of the first aspect, after the first electronic device outputs the device information of the second electronic device and the device information of the n smart devices, the method further includes: The first electronic device sends a thirteenth message to the server in response to a received unbinding instruction for unbinding from the second electronic device, where the thirteenth message indicates to cancel a binding relationship between the second electronic device and the first account. In this way, the user can complete unbinding from the second electronic device on the client through one click. This improves convenience of a user operation and significantly improves user experience.

According to any one of the first aspect or the foregoing implementations of the first aspect, that the first electronic device outputs the device information of the second electronic device and the device information of the n smart devices includes: The first electronic device displays the device information of the second electronic device and the device information of the n smart devices, and/or the first electronic device plays the device information of the second electronic device and the device information of the n smart devices through voice.

According to a second aspect, a smart home control method is provided, and is applied to a second electronic device. n smart devices are registered with the second electronic device. The second electronic device and the n smart devices are located in one local area network, n is a positive integer greater than or equal to 1. The method includes:
The second electronic device performs short-range communication with a first electronic device, and sends first information to the first electronic device, where the first information includes a first identifier of the second electronic device, a client is configured on the first electronic device, a first account is logged in to the client, and the client corresponds to a server. The second electronic device receives a second message sent by the first electronic device, where the second message includes the first account, and the second message is used to request to bind the first account to the second electronic device. The second electronic device stores the first account, and sends a third message to the first electronic device, where the third message includes information indicating that the second electronic device agrees to be bound. The second electronic device receives a fourth message sent by the first electronic device, where the fourth message includes a first activation code, the fourth message indicates the second electronic device to register with the server by using the first activation code, the first activation code is generated by the server when the server receives a first message sent by the first electronic device, the first message includes the first identifier, and the first activation code represents an identity of the second electronic device. The second electronic device sends a fifth message to the server, where the fifth message includes the first identifier and the first activation code, and the fifth message is used to request to register the second electronic device with the server. The second electronic device sends an eighth message to the server in response to a received sixth message sent by the server, where the sixth message includes registration success information, the eighth message includes second identifiers of the n smart devices, and the eighth message is used to request to obtain n second activation codes representing identities of the n smart devices. The second electronic device receives the n second activation codes sent by the server, where one second activation code corresponds to one smart device. The second electronic device sends a ninth message to each of the n smart devices, where the ninth message includes a second activation code corresponding to the smart device, and the ninth message indicates the smart device to register with the server by using the second activation code corresponding to the smart device. In this way, an account logged in to the client can be bound to the second electronic device through short-range communication between the first electronic device configured with the client and the second electronic device, so that whole-house devices can be automatically bound through only one operation, or even no operation, performed by a user. This significantly improves user experience.

For example, the second electronic device may be a gateway, an electronic device integrated with a gateway function, or an electronic device not integrated with a gateway function. For example, the second electronic device may be a hub device with a gateway function, for example, a smart speaker, a smart screen, or a router.

According to the second aspect, after the second electronic device sends the ninth message to each of the n smart devices, the method further includes: receiving a to-be-shared account sent by the server, and storing the to-be-shared account. In this way, an account shared by the user can be bound to the second electronic device, so that a peer person of the user can also use the second electronic device and the smart device registered with the second electronic device.

According to any one of the second aspect or the foregoing implementations of the second aspect, after the second electronic device sends the ninth message to each of the n smart devices, the method further includes: The second electronic device receives a fourteenth message sent by the server, where the fourteenth message indicates to unbind the second electronic device from the first account. In response to the fourteenth message, the second electronic device clears stored account information and registration information indicating that the second electronic device is registered with the server. In this way, the second electronic device can unbind a binding relationship with the account.

According to any one of the second aspect or the foregoing implementations of the second aspect, the method further includes: The second electronic device sends a fifteenth message to each of the n smart devices, where the fifteenth message indicates the smart device to clear registration information indicating that the smart device is registered with the server. In this way, the smart device can clear information indicating that the smart device is registered with the server, so that the smart device does not need to send device status information to the server after the second electronic device is unbound from the account of the user. This improves user experience.

According to a third aspect, a smart home control method is provided, and is applied to a first electronic device. A client is configured on the first electronic device. A first account is logged in to the client. The client corresponds to a server. The method includes: The first electronic device performs short-range communication with a second electronic device, and obtains first information related to the second electronic device from the second electronic device, where the first information includes a first identifier of the second electronic device, n smart devices are registered with the second electronic device, the second electronic device and the n smart devices are located in one local area network, and n is a positive integer greater than or equal to 1. The first electronic device sends a first message to the server, where the first message includes the first identifier, and the first message is used to obtain a first activation code representing an identity of the second electronic device. The first electronic device receives the first activation code sent by the server. The second electronic device receives a second message sent by the first electronic device, where the second message includes the first account, and the second message is used to request to bind the first account to the second electronic device. The first electronic device receives a sixteenth message sent by the second electronic device, where the sixteenth message includes information used to request to enter a maintenance password, and the sixteenth message is sent by the second electronic device when the second electronic device determines that the second electronic device stores account information related to a user account and the account information does not include the first account. The first electronic device sends a seventeenth message to the second electronic device in response to a received password input operation, where the seventeenth message includes the maintenance password. The first electronic device receives a twentieth message sent by the second electronic device, where the twentieth message includes device information of the second electronic device and device information of the n smart devices. The first electronic device outputs the device information of the second electronic device and the device information of the n smart devices. In this way, the second electronic device can be maintained through short-range communication between the first electronic device configured with the client and the second electronic device, so that whole-house devices can be automatically bound through only one operation, or even no operation, performed by a user. This significantly improves user experience.

For example, the second electronic device may be a gateway, an electronic device integrated with a gateway function, or an electronic device not integrated with a gateway function. For example, the second electronic device may be a hub device with a gateway function, for example, a smart speaker, a smart screen, or a router.

According to the third aspect, after the first electronic device outputs the device information of the second electronic device and the device information of the n smart devices, the method further includes: The first electronic device sends a twenty-first message to the second electronic device in response to a received unbinding instruction, where the twenty-first message indicates to cancel a binding relationship between the second electronic device and an account stored on the second electronic device. This can unbind another account from the second electronic device in place of an owner of the another account, and improve convenience of an operation.

According to a fourth aspect, a smart home control method is provided, and is applied to a second electronic device. n smart devices are registered with the second electronic device. The second electronic device and the n smart devices are located in one local area network, n is a positive integer greater than or equal to 1. The method includes: The second electronic device performs short-range communication with a first electronic device, and sends first information to the first electronic device, where the first information includes a first identifier of the second electronic device, a client is configured on the first electronic device, a first account is logged in to the client, and the client corresponds to a server. The second electronic device receives a second message sent by the first electronic device, where the second message includes the first account, and the second message is used to request to bind the first account to the second electronic device. The second electronic device determines that the second electronic device stores account information related to a user account and the account information does not include the first account, and sends a sixteenth message to the first electronic device, where the sixteenth message includes information used to request to enter a maintenance password. The second electronic device verifies the maintenance password in response to a seventeenth message sent by the first electronic device, where the seventeenth message includes the maintenance password, and when the verification succeeds, sends device information of the second electronic device and device information of the n smart devices to the first electronic device. In this way, the second electronic device can be maintained through short-range communication between the first electronic device configured with the client and the second electronic device, so that whole-house devices can be automatically bound through only one operation, or even no operation, performed by a user. This significantly improves user experience.

For example, the second electronic device may be a gateway, an electronic device integrated with a gateway function, or an electronic device not integrated with a gateway function. For example, the second electronic device may be a hub device with a gateway function, for example, a smart speaker, a smart screen, or a router.

According to the fourth aspect, after the second electronic device sends the device information of the second electronic device and the device information of the n smart devices to the first electronic device, the method further includes: The second electronic device receives a twenty-first message sent by the first electronic device, where the twenty-first message indicates to cancel a binding relationship between the second electronic device and an account stored on the second electronic device. The second electronic device sends a twenty-second message to the server in response to the twenty-first message, where the twenty-second message indicates the server to cancel the binding relationship between the second electronic device and the account stored on the second electronic device. In response to a twenty-third message sent by the server, where the twenty-third message includes unbinding success information, the second electronic device clears account information stored on the second electronic device and registration information indicating that the second electronic device is registered with the server. In this way, the second electronic device can cancel the binding relationship with the account.

According to any one of the fourth aspect or the foregoing implementations of the fourth aspect, the method further includes: The second electronic device sends a fifteenth message to each of the n smart devices, where the fifteenth message indicates the smart device to clear registration information indicating that the smart device is registered with the server. In this way, the smart device can clear information indicating that the smart device is registered with the server, so that the smart device does not need to send device status information to the server after the second electronic device is unbound from the account of the user. This improves user experience.

According to a fifth aspect, a smart home control method is provided, and is applied to a server. The server corresponds to a client. A first account is logged in to the client. The client is configured on a first electronic device. The method includes: The server receives a first message sent by the first electronic device, where the first message includes a first identifier of a second electronic device, the first message is used to obtain a first activation code representing an identity of the second electronic device, the first identifier is obtained by the first electronic device through short-range communication with the second electronic device, n smart devices are registered with the second electronic device, the second electronic device and the n smart devices are located in one local area network, and n is a positive integer greater than or equal to 1. The server generates the first activation code based on the first identifier, and sends the first activation code to the first electronic device. In this way, when receiving a registration request from the second electronic device, the server may determine whether a first activation code carried in the registration request is delivered by the server. When determining that the first activation code is delivered by the server, the server may allow the second electronic device to register. This improves security of device registration.

For example, the second electronic device may be a gateway, an electronic device integrated with a gateway function, or an electronic device not integrated with a gateway function. For example, the second electronic device may be a hub device with a gateway function, for example, a smart speaker, a smart screen, or a router.

According to the fifth aspect, after the server sends the first activation code to the first electronic device, the method further includes: The server receives a fifth message sent by the second electronic device, where the fifth message includes the first identifier and the first activation code, and the fifth message is used to request to register the second electronic device with the server. The server verifies the first activation code, records the first identifier when the verification succeeds, and sends a sixth message to the second electronic device, where the sixth message includes registration success information. The server receives an eighth message sent by the second electronic device, where the eighth message includes second identifiers of the n smart devices, and the eighth message is used to obtain n second activation codes representing identities of the n smart devices. The server generates the n second activation codes based on all of the n second identifiers, and sends the n second activation codes to the second electronic device. The server receives n tenth messages sent by the n smart devices, where each tenth message includes a second identifier and a second activation code of one smart device, and the tenth message is used to request to register the smart device with the server. The server verifies each of the n second activation codes, and records a second identifier of each of the n smart devices when the verification succeeds. The server sends a seventh message and a twelfth message to the first electronic device, where the seventh message includes device information of the second electronic device, and the twelfth message includes device information of the n smart devices. In this way, an account logged in to the client can be bound to the second electronic device through short-range communication between the first electronic device configured with the client and the second electronic device, so that whole-house devices can be automatically bound through only one operation, or even no operation, performed by a user. This significantly improves user experience.

According to any one of the fifth aspect or the foregoing implementations of the fifth aspect, after the server sends the seventh message and the twelfth message to the first electronic device, the method further includes: The server receives a thirteenth message sent by the first electronic device, where the thirteenth message indicates to cancel a binding relationship between the second electronic device and the first account. The server updates a management permission of the second electronic device, and sends a fourteenth message to the second electronic device, where the fourteenth message indicates the second electronic device to cancel the binding relationship between the second electronic device and the first account. In this way, the second electronic device can cancel the binding relationship with the first account.

According to any one of the fifth aspect or the foregoing implementations of the fifth aspect, after the server sends the first activation code to the first electronic device, the method further includes: The server receives a twenty-second message sent by the second electronic device, where the twenty-second message indicates to cancel a binding relationship between the second electronic device and an account stored on the second electronic device. The server updates a management permission of the second electronic device, and sends a twenty-third message to the second electronic device, where the twenty-third message includes unbinding success information. In this way, the second electronic device can cancel the binding relationship with the account.

According to a sixth aspect, a first electronic device is provided. A client is configured on the first electronic device. A first account is logged in to the client. The first electronic device is configured to perform the method according to any one of the first aspect or the implementations of the first aspect.

Any one of the sixth aspect or implementations of the sixth aspect corresponds to any one of the first aspect or the implementations of the first aspect. For technical effect corresponding to any one of the sixth aspect or the implementations of the sixth aspect, refer to technical effect corresponding to any one of the first aspect or the implementations of the fifth aspect. Details are not described herein again.

According to a seventh aspect, a first electronic device is provided. A client is configured on the first electronic device. A first account is logged in to the client. The first electronic device is configured to perform the method according to any one of the third aspect or the implementations of the third aspect.

Any one of the seventh aspect or implementations of the seventh aspect corresponds to any one of the third aspect or the implementations of the third aspect. For technical effect corresponding to any one of the seventh aspect or the implementations of the seventh aspect, refer to technical effect corresponding to any one of the third aspect or the implementations of the third aspect. Details are not described herein again.

According to an eighth aspect, a second electronic device is provided. n smart devices are registered with the second electronic device. The second electronic device and the n smart devices are located in one local area network. n is a positive integer greater than or equal to 1. The second electronic device is configured to perform the method according to any one of the second aspect or the implementations of the second aspect.

For example, the second electronic device may be a gateway, an electronic device integrated with a gateway function, or an electronic device not integrated with a gateway function. For example, the second electronic device may be a hub device with a gateway function, for example, a smart speaker, a smart screen, or a router.

Any one of the eighth aspect or implementations of the eighth aspect corresponds to any one of the second aspect or the implementations of the second aspect. For technical effect corresponding to any one of the eighth aspect or the implementations of the eighth aspect, refer to technical effect corresponding to any one of the second aspect or the implementations of the second aspect. Details are not described herein again.

According to a ninth aspect, a second electronic device is provided. n smart devices are registered with the second electronic device. The second electronic device and the n smart devices are located in one local area network, n is a positive integer greater than or equal to 1. The second electronic device is configured to perform the method according to any one of the fourth aspect or the implementations of the fourth aspect.

For example, the second electronic device may be a gateway, an electronic device integrated with a gateway function, or an electronic device not integrated with a gateway function. For example, the second electronic device may be a hub device with a gateway function, for example, a smart speaker, a smart screen, or a router.

Any one of the ninth aspect or implementations of the ninth aspect corresponds to any one of the fourth aspect or the implementations of the fourth aspect. For technical effect corresponding to any one of the ninth aspect or the implementations of the ninth aspect, refer to technical effect corresponding to any one of the fourth aspect or the implementations of the fourth aspect. Details are not described herein again.

According to a tenth aspect, a server is provided. The server is configured to perform the method according to any one of the fifth aspect or the implementations of the fifth aspect.

Any one of the tenth aspect or implementations of the tenth aspect corresponds to any one of the fifth aspect or the implementations of the fifth aspect. For technical effect corresponding to any one of the tenth aspect or the implementations of the tenth aspect, refer to technical effect corresponding to any one of the fifth aspect or the implementations of the fifth aspect. Details are not described herein again.

According to an eleventh aspect, a smart home control system is provided, including the client according to any one of the sixth aspect or the implementations of the sixth aspect, the second electronic device according to any one of the eighth aspect or the implementations of the eighth aspect, the server according to any one of the tenth aspect or the implementations of the tenth aspect, and n smart devices. The n smart devices are registered with the second electronic device. The second electronic device and the n smart devices are located in one local area network, n is a positive integer greater than or equal to 1.

For example, the second electronic device may be a gateway, an electronic device integrated with a gateway function, or an electronic device not integrated with a gateway function. For example, the second electronic device may be a hub device with a gateway function, for example, a smart speaker, a smart screen, or a router.

Any one of the eleventh aspect or implementations of the eleventh aspect corresponds to any one of the sixth aspect or the implementations of the sixth aspect, any one of the eighth aspect or the implementations of the eighth aspect, or any one of the tenth aspect or the implementations of the tenth aspect. For technical effect corresponding to any one of the eleventh aspect or the implementations of the eleventh aspect, refer to technical effect corresponding to any one of the sixth aspect or the implementations of the sixth aspect, any one of the eighth aspect or the implementations of the eighth aspect, or any one of the tenth aspect or the implementations of the tenth aspect. Details are not described herein again.

According to a twelfth aspect, a smart home control system is provided, including the client according to any one of the seventh aspect or the implementations of the seventh aspect, the second electronic device according to any one of the ninth aspect or the implementations of the ninth aspect, the server according to any one of the tenth aspect or the implementations of the tenth aspect, and n smart devices. The n smart devices are registered with the second electronic device. The second electronic device and the n smart devices are located in one local area network, n is a positive integer greater than or equal to 1.

For example, the second electronic device may be a gateway, an electronic device integrated with a gateway function, or an electronic device not integrated with a gateway function. For example, the second electronic device may be a hub device with a gateway function, for example, a smart speaker, a smart screen, or a router.

Any one of the twelfth aspect or implementations of the twelfth aspect corresponds to any one of the seventh aspect or the implementations of the seventh aspect, any one of the ninth aspect or the implementations of the ninth aspect, or any one of the tenth aspect or the implementations of the tenth aspect. For technical effect corresponding to any one of the twelfth aspect or the implementations of the twelfth aspect, refer to technical effect corresponding to any one of the seventh aspect or the implementations of the seventh aspect, any one of the ninth aspect or the implementations of the ninth aspect, or any one of the tenth aspect or the implementations of the tenth aspect. Details are not described herein again.

According to a thirteenth aspect, a computer-readable storage medium is provided. The computer-readable storage medium stores a computer program. When the computer program runs on a first electronic device, a client on the first electronic device is enabled to perform the method according to any one of the first aspect or the implementations of the first aspect, or perform the method according to any one of the third aspect or the implementations of the third aspect.

Any one of the thirteenth aspect or implementations of the thirteenth aspect corresponds to any one of the first aspect or the implementations of the first aspect or any one of the third aspect or the implementations of the third aspect. For technical effect corresponding to any one of the thirteenth aspect or the implementations of the thirteenth aspect, refer to technical effect corresponding to any one of the first aspect or the implementations of the first aspect or any one of the third aspect or the implementations of the third aspect. Details are not described herein again.

According to a fourteenth aspect, a computer-readable storage medium is provided. The computer-readable storage medium stores a computer program. When the computer program runs on a second electronic device, the second electronic device is enabled to perform the method according to any one of the second aspect or the implementations of the second aspect, or perform the method according to any one of the fourth aspect or the implementations of the fourth aspect.

Any one of the fourteenth aspect or the implementations of the fourteenth aspect corresponds to any one of the second aspect or the implementations of the second aspect or any one of the fourth aspect or the implementations of the fourth aspect. For technical effect corresponding to any one of the fourteenth aspect or the implementations of the fourteenth aspect, refer to technical effect corresponding to any one of the second aspect or the implementations of the second aspect, or any one of the fourth aspect or the implementations of the fourth aspect. Details are not described herein again.

According to a fifteenth aspect, a computer-readable storage medium is provided. The computer-readable storage medium stores a computer program. When the computer program runs on a server, the server is enabled to perform the method according to any one of the fifth aspect or the implementations of the fifth aspect.

Any one of the fifteenth aspect or implementations of the fifteenth aspect corresponds to any one of the fifth aspect or the implementations of the fifth aspect. For technical effect corresponding to any one of the fifteenth aspect or the implementations of the fifteenth aspect, refer to technical effect corresponding to any one of the fifth aspect or the implementations of the fifth aspect. Details are not described herein again.

According to a sixteenth aspect, a computer program product is provided. When the computer program product runs on a first electronic device, a client on the first electronic device is enabled to perform the method according to any one of the first aspect or the implementations of the first aspect, or perform the method according to any one of the third aspect or the implementations of the third aspect.

Any one of the sixteenth aspect or implementations of the sixteenth aspect corresponds to any one of the first aspect or the implementations of the first aspect or any one of the third aspect or the implementations of the third aspect. For technical effect corresponding to any one of the sixteenth aspect or the implementations of the sixteenth aspect, refer to technical effect corresponding to any one of the first aspect or the implementations of the first aspect or any one of the third aspect or the implementations of the third aspect. Details are not described herein again.

According to a seventeenth aspect, a computer program product is provided. When the computer program product runs on a second electronic device, the second electronic device is enabled to perform the method according to any one of the second aspect or the implementations of the second aspect, or perform the method according to any one of the fourth aspect or the implementations of the fourth aspect.

Any one of the seventeenth aspect or the implementations of the seventeenth aspect corresponds to any one of the second aspect or the implementations of the second aspect or any one of the fourth aspect or the implementations of the fourth aspect. For technical effect corresponding to any one of the seventeenth aspect or the implementations of the seventeenth aspect, refer to technical effect corresponding to any one of the second aspect or the implementations of the second aspect, or any one of the fourth aspect or the implementations of the fourth aspect. Details are not described herein again.

According to an eighteenth aspect, a computer program product is provided. When the computer program product runs on a server, the server is enabled to perform the method according to any one of the fifth aspect or the implementations of the fifth aspect.

Any one of the eighteenth aspect or implementations of the eighteenth aspect corresponds to any one of the fifth aspect or the implementations of the fifth aspect. For technical effect corresponding to any one of the eighteenth aspect or the implementations of the eighteenth aspect, refer to technical effect corresponding to any one of the fifth aspect or the implementations of the fifth aspect. Details are not described herein again.

### BRIEF DESCRIPTION OF DRAWINGS

FIG. 1 is a schematic diagram of an application scenario according to an embodiment of this application;
FIG. 2 is a schematic diagram of a hardware structure of an electronic device according to an embodiment of this application;
FIG. 3 is a schematic flowchart of a smart home appliance control method according to an embodiment of this application;
FIG. 4 is a schematic flowchart of a step of performing initialization configuration on a device in a hotel in the smart home appliance control method shown in FIG. 3;
FIG. 5 is a schematic flowchart of a step of performing initialization configuration on a gateway in the step of performing initialization configuration on a device in a hotel shown in FIG. 4;
FIG. 6(a), FIG. 6(b), FIG. 6(c), FIG. 6(d), and FIG. 6(e) are a schematic diagram of interface display on an electronic device during gateway configuration according to an embodiment of this application;
FIG. 7 is a schematic flowchart of a step of performing initialization configuration on a smart device in the step of performing initialization configuration on a device in a hotel shown in FIG. 4;
FIG. 8 is a schematic diagram of interface display on an electronic device according to an embodiment of this application;
FIG. 9(A) and FIG. 9(B) are a schematic flowchart of a step of discovering a smart device by a gateway in the step of performing initialization configuration on a device in a hotel shown in FIG. 4;
FIG. 10 is a schematic diagram of interface display on an electronic device according to an embodiment of this application;
FIG. 11 is a schematic diagram of interface display on an electronic device according to an embodiment of this application;
FIG. 12A and FIG. 12B are a schematic flowchart of a step of checking in at a hotel and binding a device by a customer in the smart home appliance control method shown in FIG. 3;
FIG. 13 is a schematic diagram of interface display on an electronic device according to an embodiment of this application;
FIG. 14 is a schematic flowchart of controlling a smart desk lamp by a customer according to an embodiment of this application;
FIG. 15 is a schematic diagram of interface display on an electronic device according to an embodiment of this application;
FIG. 16 is a schematic flowchart of a step of sharing a device by a customer to a peer person in the smart home appliance control method shown in FIG. 3;
FIG. 17(A), FIG. 17(B)-1, and FIG. 17(B)-2 are a schematic flowchart of a step of unbinding a device by a customer or a hotel manager in the smart home appliance control method shown in FIG. 3;
FIG. 18 is a schematic diagram of interface display on an electronic device during device unbinding performed by a customer according to an embodiment of this application;
FIG. 19A, FIG. 19B, and FIG. 19C are a schematic flowchart of a smart home control method according to an embodiment of this application;
FIG. 20 is a schematic flowchart of another smart home control method according to an embodiment of this application;
FIG. 21A and FIG. 21B are a schematic flowchart of still another smart home control method according to an embodiment of this application; and
FIG. 22 is a schematic flowchart of yet another smart home control method according to an embodiment of this application.

### DESCRIPTION OF EMBODIMENTS

Terms used in the following embodiments are merely intended to describe specific embodiments, but not to limit this application. Singular expressions "one", "a", "the", "the foregoing", "this", and "the one" used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes direct connection and indirect connection, unless otherwise specified.

The terms "first" and "second" used below are merely intended for a purpose of description, and shall not be understood as an indication or an implication of relative importance or an implicit indication of a quantity of indicated technical features. Therefore, a feature limited by "first" or "second" may explicitly or implicitly include one or more features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

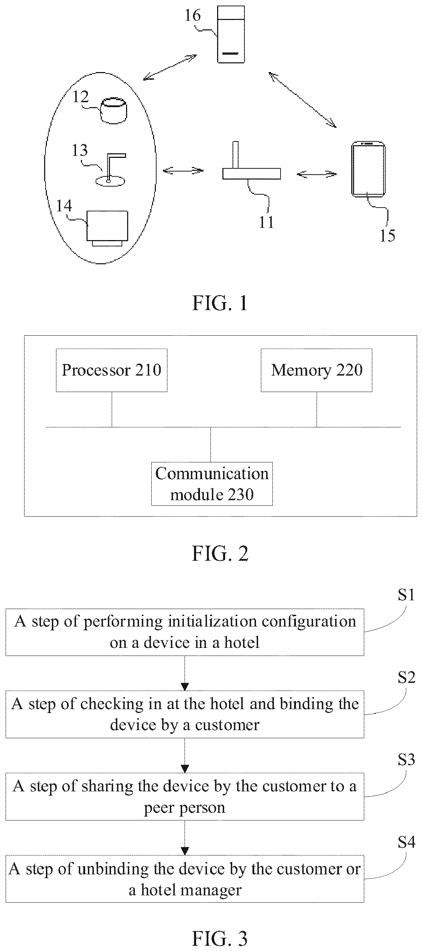

For example, the following describes an application scenario of this application with reference to FIG. 1 by using a hotel scenario as an example.

For example, FIG. 1 is a schematic diagram of an application scenario according to an embodiment of this application. As shown in FIG. 1, a gateway 11, a smart speaker 12, a smart desk lamp 13, and a smart television 14 are all deployed at a same place (for example, in a same room in a hotel), and all belong to a same manager. A mobile phone 15 belongs to a customer, and the customer may be a person who stays at the hotel. The gateway 11, the smart speaker 12, the smart desk lamp 13, and the smart television 14 may be located in one local area network, and the smart speaker 12, the smart desk lamp 13, and the smart television 14 are all registered with the gateway 11 (for example, device information of the smart speaker 12, the smart desk lamp 13, and the smart television 14 is stored on the gateway 11). A smart home management application is installed on the mobile phone 15. The application may be used to manage devices such as the gateway 11, the smart speaker 12, the smart desk lamp 13, and the smart television 14.

In this solution, when the customer to whom the mobile phone 15 belongs enters the place to which the gateway 11 belongs, the customer may log into the smart home management application on the mobile phone 15, perform near field communication with the gateway 11 by using the mobile phone 15, and establish a secure communication channel. After receiving a binding request from the mobile phone 15, the gateway 11 may agree to be bound when the gateway 11 is not bound to another customer, register the gateway 11 with a server 16, and indicate the smart speaker 12, the smart desk lamp 13, and the smart television 14 to register with the server 16. Then the customer to whom the mobile phone 15 belongs may view the gateway 11, the smart speaker 12, the smart desk lamp 13, and the smart television 14 in the smart home management application installed on the mobile phone 15, and then may control the gateway 11, the smart speaker 12, the smart desk lamp 13, and the smart television 14 by using the mobile phone 15. In this way, a plurality of devices are bound based on secure short-range transmission. This provides a user with a secure and ease-of-use technical solution for controlling a smart home appliance.

In addition, when the customer to whom the mobile phone 15 belongs leaves the place to which the gateway 11 belongs, the customer may initiate an unbinding instruction for the gateway 15 by using the smart home management application on the mobile phone 15. After receiving the unbinding instruction initiated by the customer, the server 16 may clear correspondences between the customer and the gateway 15, the smart speaker 12, the smart desk lamp 13, and the smart television 14, and indicate the gateway 15 to unbind the customer. Then the gateway 15 may clear permission information of the customer after receiving the indication from the server 16. In this way, the gateway 15 is unbound from the customer. Therefore, after leaving the place to which the gateway 11 belongs, the customer does not have a control permission on the gateway 15 or a device registered with the gateway 15.

In an example, the gateway 11 may be an entrance for the mobile phone 15 to access a smart home system to which the gateway 11 belongs, and may be an independent device, or may be carried on a smart device as a service, for example, carried on the smart television 14.

In an example, the server 16 may be connected to the gateway 11, the smart speaker 12, the smart desk lamp 13, the smart television 14, and the mobile phone 15 through a network, to perform long-range communication. For example, the network may be a local area network (local area network, LAN) or a wide area network (wide area network, WAN) (for example, the Internet). The mobile phone 15 and the gateway 11 may communicate with each other through short-range communication such as near field communication (near field communication, NFC) or neighborhood aware networking (neighborhood aware networking, NAN) with controlled transmit power. The gateway 11 may be connected to a smart device such as the smart speaker 12, the smart desk lamp 13, or the smart television 14 through power line communication (power line communication, PLC), a network cable, wireless fidelity (wireless fidelity, Wi-Fi), Bluetooth (Bluetooth), Zigbee (Zigbee), or another technology.

It can be understood that the electronic devices shown in FIG. 1 may alternatively be replaced with other electronic devices, such as a tablet computer and a wearable device. For example, the electronic device in this solution may include but is not limited to an electronic device on which HarmonyOS^{®}, iOS^{®}, Android^{®}, Microsoft^{®}, or another operating system is installed. A specific type of the electronic device is not particularly limited in this solution.

For example, FIG. 2 is a schematic diagram of a structure of an electronic device. The electronic device may be any electronic device shown in FIG. 1. As shown in FIG. 2, the electronic device 200 may include a processor 210, a memory 220, and a communication module 230. The processor 210, the memory 220, and the communication module 230 may be connected through a bus or in another manner.

In this solution, the processor 210 is a computing core and a control core of the electronic device 200. The processor 210 may include one or more processing units. For example, the processor 210 may include an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The memory 220 may store a program, and the program may be run by the processor 210, so that the processor 210 performs a method provided in this application. The memory 220 may further store data. The processor 210 may read the data stored in the memory 220. The memory 220 and the processor 210 may be separately disposed. Optionally, the memory 220 may alternatively be integrated into the processor 210.

The communication module 230 may include at least one of a mobile communication module and a wireless communication module. When the communication module 230 includes the mobile communication module, the communication module 230 may provide a solution applied to the electronic device 200 for wireless communication such as 2G/3G/4G/5G, for example, global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), and new radio (new radio, NR).

The communication module 230 may include at least one filter, a switch, a power amplifier, a low noise amplifier (low noise amplifier, LNA), and the like. The communication module 230 may receive an electromagnetic wave through at least one antenna, perform processing such as filtering and amplification on the received electromagnetic wave, and transmit the electromagnetic wave to the modem for demodulation. The communication module 230 may further amplify a signal modulated by the modem, and convert the signal into an electromagnetic wave for radiation through the antenna. In some examples, at least some functional modules of the communication module 230 may be disposed in the processor 210. In some examples, at least some functional modules of the communication module 230 may be disposed in a same device as at least some modules of the processor 210. When the communication module 230 includes the wireless communication module, the communication module 230 may provide a solution applied to the electronic device 200 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The communication module 230 may be one or more components integrating at least one communication processor module. The communication module 230 receives an electromagnetic wave through the antenna, performs frequency modulation and filtering on an electromagnetic wave signal, and sends a processed signal to the processor 210. The communication module 230 may further receive a to-be-sent signal from the processor 210, perform frequency modulation and amplification on the signal, and convert the signal into an electromagnetic wave for radiation through the antenna.

It can be understood that the structure shown in FIG. 2 in this solution does not constitute a specific limitation on the electronic device 200. In some other embodiments of this solution, the electronic device 200 may include more or fewer components than those shown in the figure, some components may be combined, some components may be split, or there may be different component layouts. The components shown in the figure may be implemented by hardware, software, or a combination of software and hardware.

Technical solutions provided in this application are described below in detail with reference to FIG. 3. For example, FIG. 3 is a schematic flowchart of a smart home appliance control method according to an embodiment of this application. As shown in FIG. 3, the method may include the following steps.

### S1: a step of performing initialization configuration on a device in a hotel

Specifically, the step of performing initialization configuration on a device in a hotel is used to perform initialization configuration on a device in a hotel. In this embodiment of this application, a hotel manager may log in to a client to perform initialization configuration on the device in the hotel, so that a customer who subsequently checks in at the hotel can be bound to the device in the hotel and use the device in the hotel.

It should be noted that S1 is not a necessary step of the method. To be specific, during execution of the method, S1 is not necessarily performed each time.

### S2: a step of checking in at the hotel and binding the device by a customer

Specifically, after initialization configuration is performed on the device in the hotel, when the customer checks in at the hotel, the customer may log in to the client, and bind a user account of the customer to the device in the hotel, so that the customer can control the device in the hotel on the client.

### S3: a step of sharing the device by the customer to a peer person

Specifically, after binding the device, the customer may share the bound device to the peer person, so that the peer person can also control the device in the hotel on the client.

It should be noted that S3 is not a necessary step of the method. To be specific, during execution of the method, S3 is not necessarily performed each time, or S3 may be skipped each time, or S3 may be performed each time.

### S4: a step of unbinding the device by the customer or the hotel manager

Specifically, after the customer checks out, the customer may actively unbind the device on the client, so that a customer who subsequently checks in can be bound to the device. Alternatively, when the customer forgets to unbind the device, the hotel manager may unbind the device from the customer on the client, so that a customer who subsequently checks in can be bound to the device.

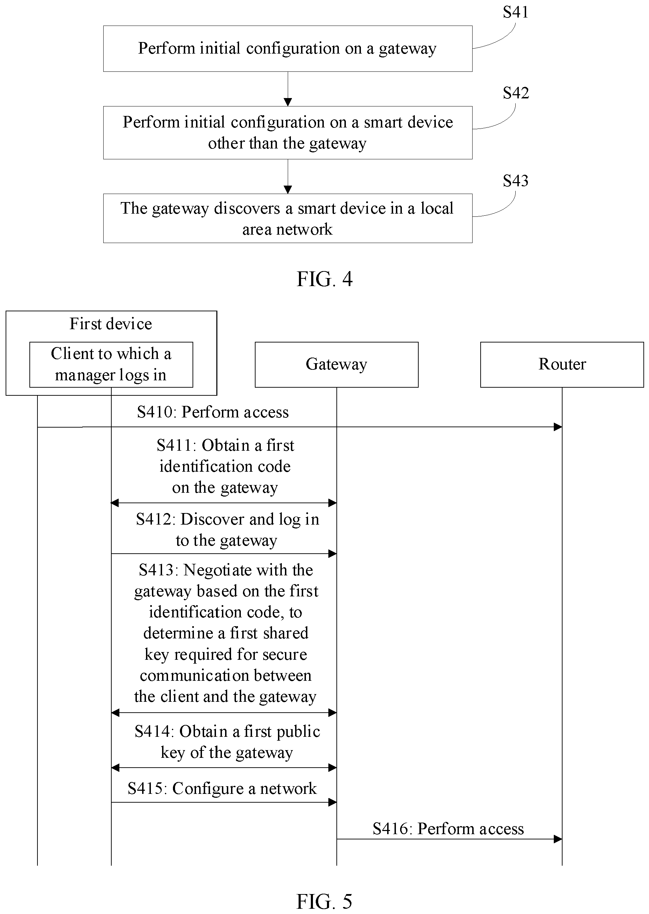

The step of performing initialization configuration on a device in a hotel in the smart home appliance control method provided in this application is described below in detail with reference to FIG. 4. In this embodiment of this application, before the hotel is put into operation, the hotel manager may perform initial configuration on the device in the hotel. The initial configuration may include initial configuration for a gateway and initial configuration for a smart device other than the gateway. For example, FIG. 4 is a schematic flowchart of the step of performing initialization configuration on a device in a hotel in the smart home appliance control method provided in this embodiment of this application. As shown in FIG. 4, the step of performing initialization configuration on a device in a hotel may include the following steps.

S41: Perform initial configuration on the gateway.

Specifically, before the hotel is put into operation, the hotel manager may perform initial configuration on the gateway, for example, configure a network for the gateway.

It should be noted that S41 is not a necessary step of the method. To be specific, during execution of the method, S41 is not necessarily performed each time. For example, if the gateway is carried on a router in the hotel, the gateway accesses a network in the hotel through a network cable. Therefore, in this case, no network needs to be configured for the gateway, in other words, S41 does not need to be performed.

S42: Perform initial configuration on the smart device other than the gateway.

Specifically, before the hotel is put into operation, the hotel manager may perform initial configuration on the smart device, for example, configure a network for the smart device.

S43: The gateway discovers a smart device in a local area network.

After initialization configuration is performed on both the gateway and the smart device, the gateway may discover a smart device located in the same local area network as the gateway. In this way, the initialization configuration for the device in the hotel is completed.

For example, specific steps of S41 may be shown in FIG. 5. Specifically, S41 may include the following steps.

S410: A first device used by the manager accesses a network in a room to which the gateway belongs.

Specifically, when performing initial configuration on the gateway, the manager may first connect the first device used by the manager to the network in the room to which the gateway belongs. In this case, the gateway does not access the network. For example, a network may be separately configured for each room in the hotel. For example, a client related to smart home appliance control, for example, a Huawei AI Life client, is installed on the first device.

S411: The client to which the manager logs in obtains a first identification code on the gateway.

Specifically, the manager may log in to the client by using a management account and password on the first device (for example, a mobile phone) on which the client is installed. Then the client to which the manager logs in may obtain the first identification code on the gateway with assistance of the manager.

For example, the first identification code, for example, a personal identification number (personal identification number, PIN code), may be preset on the gateway. For example, the first identification code may be preset in an NFC label on the gateway. In this case, the manager may put the first device in contact with the gateway, so that the client to which the manager logs in can obtain the first identification code. For example, the first identification code may alternatively be preset in a graphic code (for example, a two-dimensional code) on the gateway. In this case, the manager may scan the graphic code by using the first device, so that the client to which the manager logs in can obtain the first identification code. For example, the first identification code may be preset in both an NFC label and a graphic code on the gateway. In this case, the manager may enable, in either of the manners, the client to which the manager logs in to obtain the first identification code.

For example, the first identification code may alternatively be randomly generated. In this case, when the manager puts the first device in contact with the gateway, the gateway may randomly generate the first identification code based on the contact operation, and send the first identification code to the client to which the manager logs in. In addition, when the gateway is carried on a device with a display, the first identification code randomly generated by the gateway may be presented to the manager in a form of a graphic code on the display, so that the manager can scan the graphic code by using the first device to obtain the first identification code.

S412: The client to which the manager logs in discovers and logs in to the gateway.

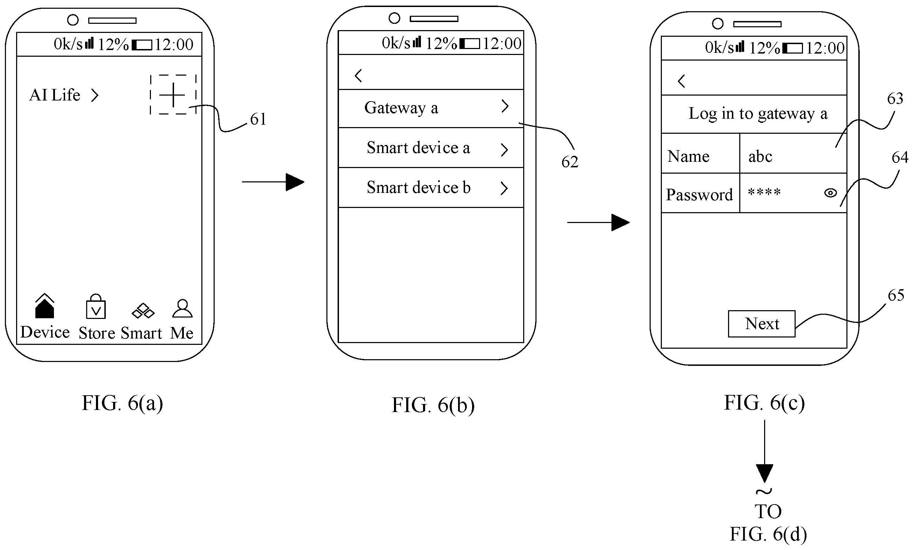

Specifically, the manager may add or search for a device on the client to which the manager logs in, or the client to which the manager logs in may automatically perform a device discovery process. For example, as shown in FIG. 6(a), the manager may select a "Search for device" button in an area 61 to discover a device. It can be understood that, after being started, the gateway may perform self-check to determine whether a network is configured for the gateway. When the gateway determines that no network is configured for the gateway, the gateway may externally broadcast device information of the gateway (for example, an identifier of the gateway), so that the gateway can be discovered by another device. After the client to which the manager logs in receives the device information broadcast by the gateway, the client to which the manager logs in may learn of information about the gateway, to discover the gateway. In addition, the gateway may also externally broadcast information indicating that no network is configured for the gateway. After receiving the information indicating that no network is configured for the gateway, the client to which the manager logs in may determine to perform a network configuration process, but not a binding process.

After finding a device, the client to which the manager logs in may present the device found by the client to the manager for selection by the manager. For example, as shown in FIG. 6(b), the client to which the manager logs in may present a device list to the manager.

When the device found by the client to which the manager logs in includes the gateway, the manager may select the gateway to perform initial configuration on the gateway. For example, still as shown in FIG. 6(b), the manager may select a "Gateway a" in an area 62.

After the client to which the manager logs in receives a selection operation performed by the manager, the client to which the manager logs in may display a gateway login interface, and the manager needs to enter a login name and password for the gateway on the interface. After the manager enters the login name and password for the gateway, the client to which the manager logs in may access the gateway. In this case, the client to which the manager logs in may perform initial configuration on the gateway. In an example, the login name and password may be reserved on the gateway.

For example, as shown in FIG. 6(c), after the manager selects the gateway a, the client to which the manager logs in may display a login interface. On the login interface, the manager may enter a login name for the gateway a in an area 63, and enter a login password for the gateway a in an area 64. Then the manager may tap "Next" in an area 65. Then the client to which the manager logs in may perform initial configuration on the gateway a.

S413: The client to which the manager logs in negotiates with the gateway based on the first identification code, to determine a first shared key required for secure communication between the client and the gateway.

Specifically, before initial configuration is performed on the gateway, the client to which the manager logs in may negotiate with the gateway based on the first identification code to obtain the first shared key. Both the client and the gateway may encrypt communication information by using the first shared key, and send encrypted communication information to each other, to ensure security of communication. For example, after obtaining the first identification code, the client to which the manager logs in may negotiate with the gateway based on the first identification code and a password authentication-based key exchange algorithm (simple password exponential key exchange, SPEKE), to determine the first shared key.

For example, a process of determining the first shared key is described by using an example in which the client to which the manager logs in is a Client, the gateway is a Gateway, and the first identification code is p. The process is specifically as follows:
(1) The Client generates a random public key/private key pair *U_{A}*/*V_{A},* encrypts *U_{A}* by using p to obtain *Eₚ*(*U_{A}*), and sends *Eₚ*(*U_{A}*) to the Gateway.
(2) The Gateway decrypts *Eₚ*(*U_{A}*) by using p that is preset on the Gateway to obtain the public key of the Client: *U_{A}* = *Dₚ*(*Eₚ*(*U_{A}*))*.* The Gateway generates a random first shared key K, encrypts K by using *U_{A}* to obtain *U_{A}*(*K*), encrypts *U_{A}*(*K*) by using p to obtain *Eₚ*(*U_{A}*(*K*))*,* and then sends *Eₚ*(*U_{A}*(*K*)) to the Client.
(3) The Client decrypts to *Eₚ*(*U_{A}*(*K*)) obtain K = *V_{A}*(*Eₚ*(*U_{A}*(*K*))). The Client generates a random challenge number *C_{A}*, encrypts *C_{A}* by using K to obtain *Eₖ*(*C_{A}*), and sends *Eₖ*(*C_{A}*) to the Gateway.
(4) The Gateway decrypts *Eₖ*(*C_{A}*) to obtain *C_{A}.* The Gateway generates a random challenge number *C_{B},* encrypts (C_{A} ∥ *C_{B}*) by using K to obtain *Eₖ*(*C_{A}* ∥ *C_{B}*), and sends *Eₖ*(*C_{A}* ∥ *C_{B}*) to the Client.
(5) The Client decrypts *Eₖ*(*C_{A}* ∥ *C_{B}*) to obtain *C_{A}* and *C_{B}.* The Client encrypts *C_{B}* by using K to obtain *Eₖ*(*C_{B}*), and sends *Eₖ*(*C_{B}*) to the Gateway.
(6) The Gateway decrypts *Eₖ*(*C_{B}*) to obtain *C_{B}.* If the foregoing steps are successful, the Client and the Gateway successfully agree on the first shared key K, in other words, the first shared key K is determined. During subsequent communication, the Client and the Gateway may encrypt communication information by using the first shared key K, and then send encrypted communication information to each other.

It can be understood that, after the client to which the manager logs in and the gateway determine the first shared key through negotiation, subsequent communication information between the client and the gateway may be encrypted by using the first shared key and then transmitted to each other. For ease of description, encryption and decryption processes are not described in subsequent steps again.

For example, an information sending process is described by using an example in which the client to which the manager logs in is a Client, the gateway is a Gateway, the first shared key is K, and to-be-sent data is f. The process is specifically as follows: (1) The Client encrypts f by using K to obtain *Eₖ*(*f*), and sends *Eₖ*(*f*) to the Gateway. (2) The Gateway decrypts *Eₖ*(*f*) by using K to obtain f.

S414: The client to which the manager logs in obtains a first public key of the gateway.

Specifically, after the client to which the manager logs in and the gateway determine the first shared key through negotiation, the client to which the manager logs in may send a public key obtaining request to the gateway. Then the gateway may encrypt the first public key of the gateway by using the first shared key, and send an encrypted first public key to the client to which the manager logs in. Then the client to which the manager logs in decrypts information sent by the gateway to obtain the first public key. The client to which the manager logs in obtains the public key of the gateway mainly to facilitate key agreement between the gateway and a smart device in a subsequent process of discovering the smart device by the gateway.

S415: The client to which the manager logs in configures a network for the gateway.

Specifically, in this step, a network is mainly configured for the gateway, for example, a network that the gateway needs to join and a join password for the network are selected, so that the gateway can access a wireless network in the hotel.

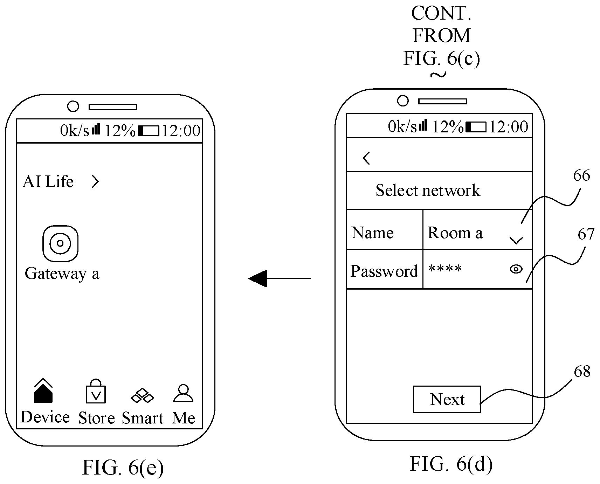

For example, still as shown in FIG. 6(c), after the manager selects the "Next" button in the area 65, the client to which the manager logs in may display a network configuration interface, that is, display an interface shown in FIG. 6(d). In this case, the manager may select a network that the manager expects the gateway to join. Still as shown in FIG. 6(d), the manager may select a network "Room a" in an area 66. Then the manager may enter a network password for the "Room a" in an area 67, and select a "Next" button in an area 68. Then the client to which the manager logs in may send a network name and password configured by the manager to the gateway. In this way, the network configuration for the gateway is completed.

S416: The gateway accesses the configured network.

Specifically, after receiving configuration information sent by the client to which the manager logs in, the gateway may join the configured network based on the network name and password in the configuration information.

In this way, the initial network configuration for the gateway is completed. In this case, the configured gateway may be viewed on the client to which the manager logs in. For example, as shown in FIG. 6(e), the newly configured gateway a may be seen on the client to which the manager logs in.

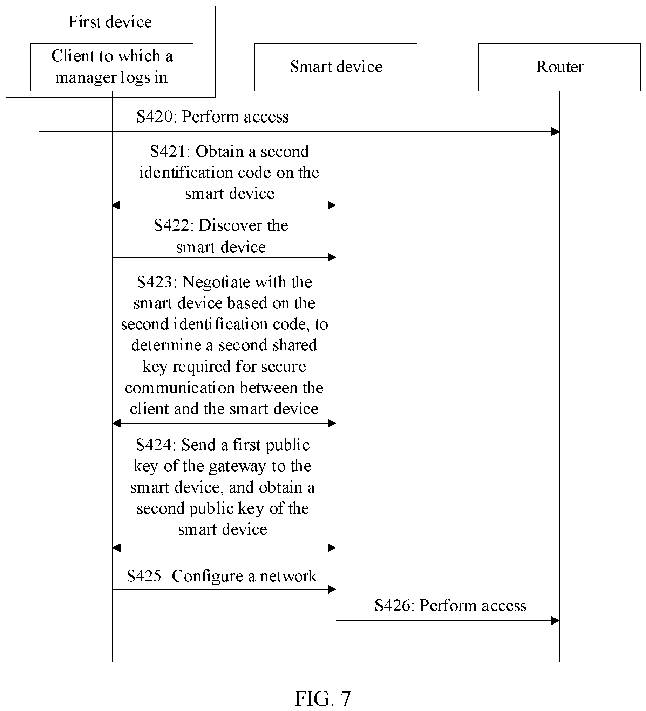

For example, specific steps of S42 may be shown in FIG. 7. Specifically, S42 may include the following steps.

S420: The first device used by the manager accesses a network in a room to which the smart device belongs.

Specifically, when performing initial configuration on the smart device, the manager may first connect the first device used by the manager to the network in the room to which the smart device belongs. In this case, the smart device does not access the network. For example, a network may be separately configured for each room in the hotel. For example, a client related to smart home appliance control, for example, a Huawei AI Life client, is installed on the first device.

It should be noted that S420 is not a necessary step of the method. To be specific, during execution of the method, S420 is not necessarily performed each time. For example, after the manager configures the gateway, if the manager continues to configure a smart device in the room to which the gateway belongs, S420 may not be performed; or if the manager does not configure the smart device in the room to which the gateway belongs, but configures a smart device in a room to which another gateway belongs, S420 needs to be performed.

It can be understood that, in this embodiment of this application, networks in rooms to which different gateways belong may be different. This facilitates configuration of the gateway and a smart device that belongs to the same room as the gateway, and avoids a configuration error in a subsequent process of discovering a smart device by the gateway. In addition, this helps protect privacy of a customer after the customer checks in, to prevent an unauthorized person from obtaining information about the customer from a local area network.

S421: The client to which the manager logs in obtains a second identification code on the smart device.

Specifically, the manager may log in to the client by using a management account and password on the first device (for example, a mobile phone) on which the client is installed. Then the client to which the manager logs in may obtain the second identification code on the smart device with assistance of the manager.

For example, the second identification code, for example, a personal identification number (personal identification number, PIN code), may be preset on the smart device. For example, the second identification code may be preset in an NFC label on the smart device. In this case, the manager may put the first device in contact with the smart device, so that the client to which the manager logs in can obtain the second identification code. For example, the second identification code may alternatively be preset in a graphic code (for example, a two-dimensional code) on the smart device. In this case, the manager may scan the graphic code by using the first device, so that the client to which the manager logs in can obtain the second identification code. For example, the second identification code may be preset in both an NFC label and a graphic code on the smart device. In this case, the manager may enable, in either of the manners, the client to which the manager logs in to obtain the second identification code.

For example, the second identification code may alternatively be randomly generated. In this case, when the manager puts the first device in contact with the smart device, the smart device may randomly generate the second identification code based on the contact operation, and send the second identification code to the client to which the manager logs in. In addition, when the smart device includes a display, the second identification code randomly generated by the smart device may be presented to the manager in a form of a graphic code, so that the manager can scan the graphic code by using the first device to obtain the second identification code.

S422: The client to which the manager logs in discovers the smart device.

Specifically, the manager may add or search for a device on the client to which the manager logs in. For example, still as shown in FIG. 6(a), the manager may select a "Search for device" button in an area 61 to discover a device. It can be understood that, after being started, the smart device may perform self-check to determine whether a network is configured for the smart device. When the smart device determines that no network is configured for the smart device, the smart device may externally broadcast device information of the smart device (for example, an identifier of the smart device), so that the smart device can be discovered by another device. After the client to which the manager logs in receives the device information broadcast by the smart device, the client to which the manager logs in may learn of information about the smart device, to discover the smart device.

After finding a device, the client to which the manager logs in may present the device found by the client to the manager for selection by the manager. For example, still as shown in FIG. 6(b), the client to which the manager logs in may present a device list to the manager.

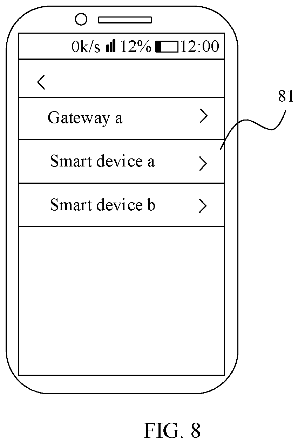

When the device found by the client to which the manager logs in includes the smart device, the manager may select the smart device to perform initial configuration on the smart device. For example, as shown in FIG. 8, the manager may select a "Smart device a" in an area 81.

S423: The client to which the manager logs in negotiates with the smart device based on the second identification code, to determine a second shared key required for secure communication between the client and the smart device.

Specifically, before initial configuration is performed on the smart device, the client to which the manager logs in may negotiate with the smart device based on the second identification code to obtain the first shared key. Both the client and the smart device may encrypt communication information by using the second shared key, and send encrypted communication information to each other, to ensure security of communication. For example, after obtaining the second identification code, the client to which the manager logs in may negotiate with the smart device based on the second identification code and a password authentication-based key exchange algorithm (simple password exponential key exchange, SPEKE), to determine the second shared key. For a negotiation process, refer to the foregoing descriptions. Details are not described herein again.

It can be understood that, after the client to which the manager logs in and the smart device determine the second shared key through negotiation, subsequent communication information between the client and the smart device may be encrypted by using the second shared key and then transmitted to each other. For ease of description, encryption and decryption processes are not described in subsequent steps again.

S424: The client to which the manager logs in sends the first public key of the gateway to the smart device, and obtains a second public key of the smart device.

Specifically, after the client to which the manager logs in and the smart device determine the second shared key through negotiation, the client to which the manager logs in may encrypt the first public key of the gateway by using the second shared key, and send an encrypted first public key to the smart device. After receiving encrypted information, the smart device may obtain the first public key of the gateway through decryption. Then the smart device may encrypt the second public key of the smart device by using the second shared key, and send an encrypted second public key to the client to which the manager logs in. The client to which the manager logs in decrypts information sent by the smart device to obtain the second public key. The client to which the manager logs in obtains the public key of the smart device mainly to subsequently notify the gateway of the public key of the smart device, to facilitate key agreement between the gateway and the smart device in a subsequent process of discovering the smart device by the gateway.

S425: The client to which the manager logs in configures a network for the smart device.

Specifically, in this step, a network is mainly configured for the smart device, for example, a network that the smart device needs to join and a join password for the network are selected, so that the smart device can access a wireless network in the hotel.

In an example, to enable the gateway to discover the smart device, the network configured for the smart device may be the same as the network configured for the gateway, to ensure that the gateway and the smart device are located in one local area network.

For example, still as shown in FIG. 8, after the manager selects the "Smart device a" in the area 81, the client to which the manager logs in may display a network configuration interface, that is, display an interface shown in FIG. 6(d). In this case, the manager may select a network that the manager expects the smart device to join. Still as shown in FIG. 6(d), the manager may select a network "Room a" in an area 66. Then the manager may enter a network password for the "Room a" in an area 67, and select a "Next" button in an area 68. Then the client to which the manager logs in may send a network name and password configured by the manager to the smart device a. In this way, the network configuration for the smart device a is completed.

S426: The smart device accesses the configured network.

Specifically, after receiving configuration information sent by the client to which the manager logs in, the smart device may join the configured network based on the network name and password in the configuration information.

In this way, the initial network configuration for the smart device is completed.

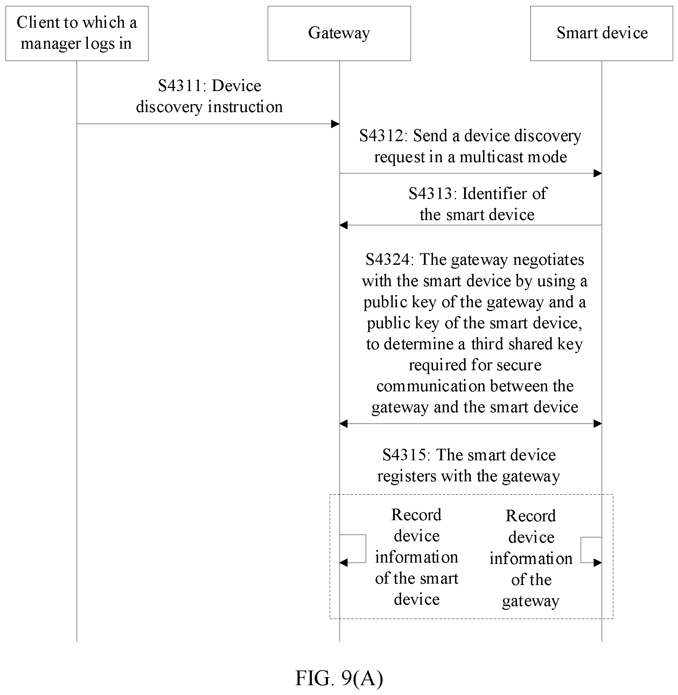

For example, specific steps of S43 may be shown in FIG. 9(A). The steps shown in FIG. 9(A) are steps of actively triggering, by the manager, the gateway to discover a smart device. Specifically, S43 may include the following steps.

S4311: The client to which the manager logs in sends a device discovery instruction to the gateway.

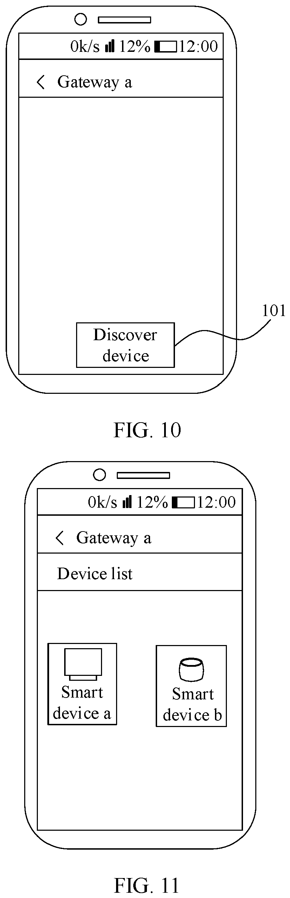

Specifically, after configuring the gateway and the smart device, the manager may log in to the gateway from the client to which the manager logs in, and choose to enable the gateway to discover a device. For example, as shown in FIG. 10, after logging in to the gateway, the manager may select a "Discover device" button in an area 101. Then the client to which the manager logs in may send the device discovery instruction to the gateway.

After the manager controls, through the client to which the manager logs in, the gateway to discover a device, that is, after the device discovery instruction is delivered, the client to which the manager logs in may send the device discovery instruction to the gateway. For example, the device discovery instruction may include the second public key of the smart device, so that the gateway learns of the public key of the smart device, and agrees with the smart device on a shared key.

S4312: The gateway sends a device discovery request in a multicast mode.

Specifically, because the gateway and the smart device access one local area network, the gateway may send the device discovery request in the multicast mode in the local area network. For example, the device discovery request may carry the device information of the gateway. For example, a device identification of the gateway may include an identifier of the gateway, for example, a product serial number or a host address.

S4313: The smart device sends an identifier to the gateway.

Specifically, after a smart device located in the same network as the gateway receives the device discovery request sent by the gateway, the smart device may send an identifier of the smart device to the gateway.

In an example, if the smart device already stores the device information of the gateway, it indicates that the smart device is registered with the gateway. In this case, the smart device may not need to send the identifier to the gateway again.

S4314: The gateway negotiates with the smart device by using the public key of the gateway and the public key of the smart device, to determine a third shared key required for secure communication between the gateway and the smart device.

Specifically, after obtaining the identifier of the smart device, the gateway may find the public key of the smart device based on the identifier. Then the gateway may negotiate with the smart device by using the public key of the gateway and the public key of the smart device based on a station-to-station (station-to-station, STS) key agreement algorithm, to obtain a third shared key that can be shared by the gateway and the smart device. Then the gateway and the smart device may encrypt communication information by using the third shared key, and send encrypted communication information to each other, to implement security of communication between the gateway and the smart device.

It can be understood that, after the gateway and the smart device determine the third shared key through negotiation, subsequent communication information between the gateway and the smart device may be encrypted by using the third shared key and then transmitted to each other. For ease of description, encryption and decryption processes are not described in subsequent steps again.

S4315: The smart device registers with the gateway.

Specifically, after the gateway and the smart device determine the shared key through negotiation, the gateway may record the device information of the smart device, and the smart device may also record the device information of the gateway. For example, a device identification of the smart device may include an identifier of the smart device, for example, a product serial number or a host address; and a device identification of the gateway may include an identifier of the gateway, for example, a product serial number or a host address.

In this way, the gateway discovers a smart device located in the same local area network as the gateway.

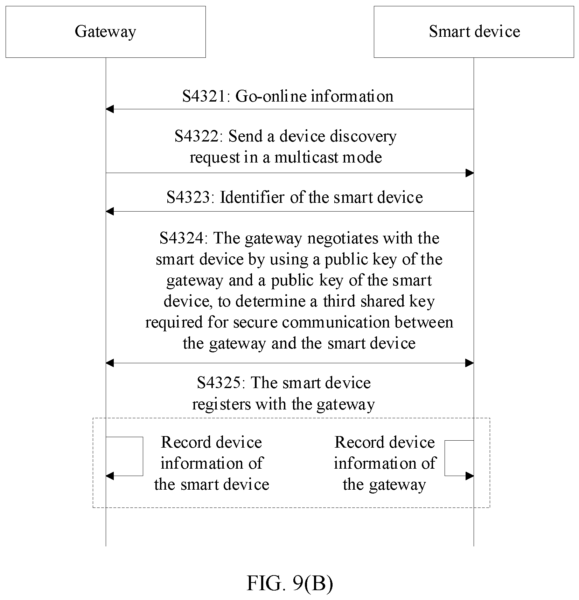

For example, specific steps of S43 may alternatively be shown in FIG. 9(B). The steps shown in FIG. 9(B) are also steps of automatically triggering, by the gateway, discovery of a smart device. The gateway can hardly continuously perform broadcast. Therefore, to improve efficiency, when the smart device goes online, the smart device may perform broadcast indicating that the smart device is online. After receiving the broadcast, the gateway may start to discover a device. In addition, in a process of discovering the smart device by the gateway, the gateway and the smart device need to agree on a shared key, and a prerequisite for negotiating on a shared key is that the gateway needs to learn of a public key of the smart device in advance and the smart device needs to learn of a public key of the gateway in advance. Therefore, after the client to which the manager logs in obtains the public key of the smart device, the client to which the manager logs in may actively send the public key of the smart device to the gateway, so that the gateway learns of the public key of the smart device in a timely manner. It can be understood that, because the client to which the manager logs in has sent the public key of the gateway to the smart device when the smart device is configured, the client to which the manager logs in may not need to send the public key of the gateway to the smart device again in this case.

Specifically, S43 may include the following steps.

S4321: The smart device sends go-online information.

After the smart device is started, the smart device may broadcast, in a local area network, information indicating that the smart device is online. For example, the go-online information may be understood as information indicating that the smart device is started.

S4322: The gateway sends a device discovery request in a multicast mode.

S4323: The smart device sends an identifier to the gateway.

S4324: The gateway negotiates with the smart device by using the public key of the gateway and the public key of the smart device, to determine a third shared key required for secure communication between the gateway and the smart device.

S4325: The smart device registers with the gateway.

In this way, the gateway discovers a smart device located in the same local area network as the gateway.

In an example, after the gateway discovers the smart device, the manager may view, on the gateway, the smart device discovered by the gateway. For example, as shown in FIG. 11, after logging in to the gateway through the client to which the manager logs in, the manager may view smart devices discovered by the gateway, for example, a smart device a and a smart device b.

Further, to help the manager maintain the gateway and a device registered with the gateway, the manager may set a maintenance password for the gateway, to lock a relationship between the gateway and the smart device, and prevent a person (for example, a customer who stays at the hotel) other than the manager from randomly changing the relationship between the gateway and the smart device. For example, after the initial configuration for the gateway or the smart device is completed, the client to which the manager logs in may guide the manager to set the maintenance password.

In this way, the initialization configuration is completed.

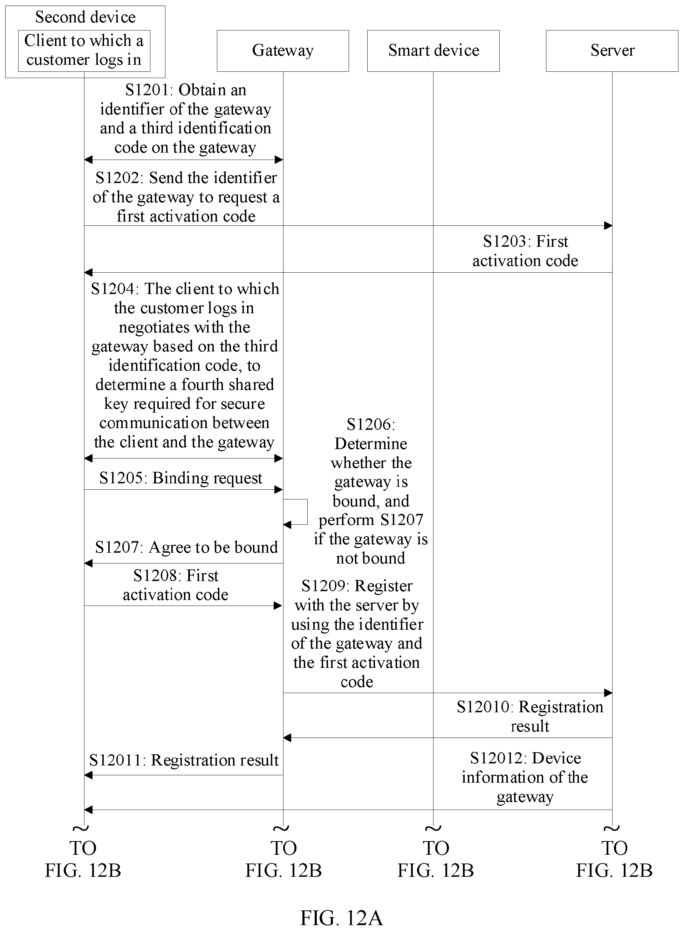

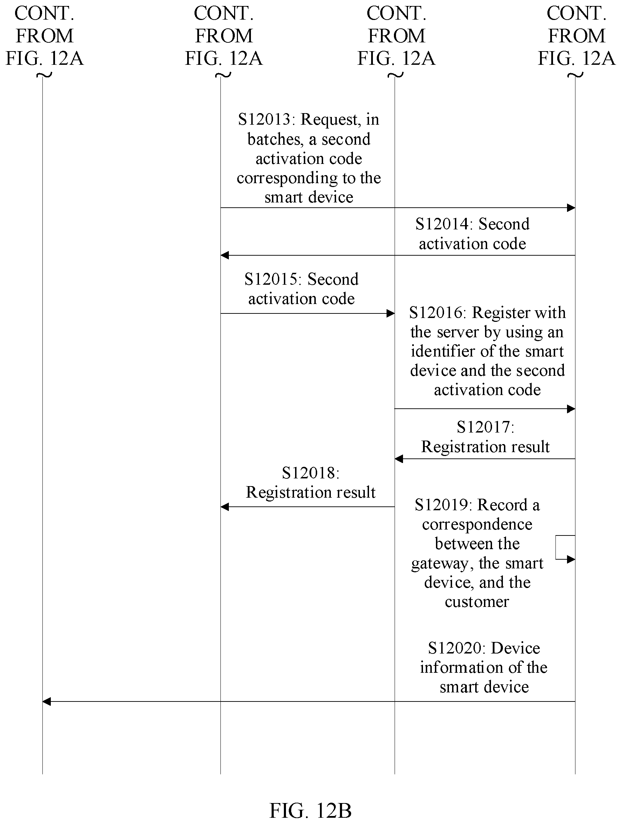

The step of checking in at the hotel and binding the device by a customer in the smart home appliance control method provided in this application is described below in detail with reference to FIG. 12A and FIG. 12B. In this embodiment of this application, a customer may check in at the hotel after the hotel is put into operation. After checking in at the hotel, the customer may be bound to a gateway in a room in which the customer stays, to control a smart device registered with the gateway. A second device used by the customer may perform short-range communication with the gateway, and the second device may perform long-range communication with a server corresponding to a client installed on the second device. In addition, the gateway may perform long-range communication with the server. For example, FIG. 12A and FIG. 12B are a schematic flowchart of the step of checking in at the hotel and binding the device by a customer in the smart home appliance control method provided in this embodiment of this application. As shown in FIG. 12A and FIG. 12B, the step of checking in at the hotel and binding the device by a customer may include the following steps.

S1201: A client to which the customer logs in obtains an identifier of the gateway and a third identification code on the gateway.

Specifically, the customer may log in to the client by using a registered user account and password of the customer on the second device (for example, a mobile phone) on which the client is installed. Then the client to which the customer logs in may obtain the identifier of the gateway and the third identification code on the gateway with assistance of the customer. For details about a process of obtaining the third identification code, refer to the foregoing descriptions. Details are not described herein again. For the identifier of the gateway, when sending the third identification code to the client to which the customer logs in, the gateway may send the identifier of the gateway at the same time or at different time.

S1202: The client to which the customer logs in requests a first activation code from the server.

Specifically, after obtaining the identifier of the gateway, the client to which the customer logs in may send the identifier of the gateway to the server, to request the first activation code from the server. The first activation code mainly represents an identity of the gateway.

S1203: The server sends the first activation code to the client to which the customer logs in.

Specifically, after receiving the request from the client to which the customer logs in, the server may randomly generate the first activation code based on the identifier of the gateway. For example, the first activation code may include a plurality of random numbers. After generating the first activation code, the server may send the first activation code to the client to which the customer logs in.

S1204: The client to which the customer logs in negotiates with the gateway based on the third identification code, to determine a fourth shared key required for secure communication between the client and the gateway.

Specifically, before the client to which the customer logs in is bound to the gateway, to ensure security of communication between the client and the gateway, the client to which the customer logs in negotiates with the gateway based on the third identification code to obtain the fourth shared key. For a detailed process, refer to the foregoing descriptions. Details are not described herein again. The fourth shared key is mainly used to encrypt communication information during communication between the client and the gateway.

It can be understood that, after the client to which the customer logs in and the gateway determine the fourth shared key through negotiation, subsequent communication information between the client and the gateway may be encrypted by using the fourth shared key and then transmitted to each other. For ease of description, encryption and decryption processes are not described in subsequent steps again.

S1205: The client to which the customer logs in sends a binding request to the gateway.

Specifically, after obtaining the fourth shared key, the client to which the customer logs in may encrypt the binding request based on the fourth shared key, and send an encrypted binding request to the gateway. The binding request requests to bind a user account for the client to which the customer logs in to the gateway. The binding request may carry a first account identifier representing a customer account. For example, the first account identifier representing the customer account may be a hash value obtained by performing hash calculation on the customer account.

S1206: The gateway determines whether the gateway is bound.

Specifically, after receiving the binding request encrypted based on the fourth shared key, the gateway may decrypt the information to obtain the binding request. After the gateway is bound, the gateway may store an account identifier representing the user account of the customer. Therefore, after the gateway receives the binding request sent by the client to which the customer logs in, the gateway may determine whether the gateway stores an account identifier. If the gateway stores an account identifier, it indicates that the gateway is bound to another customer. In this case, the gateway may prohibit being bound to the current customer, and the gateway may feed back binding failure information to the client to which the customer logs in. If the gateway stores no account identifier, it indicates that the gateway is not bound to another customer. In this case, the gateway may agree to be bound to the current customer, and perform a subsequent step.

In an example, after the gateway agrees to be bound to the current customer, the gateway may record customer account information of the customer, for example, record an account identifier of the customer.

S1207: The gateway sends binding consent information to the client to which the customer logs in.

S1208: The client to which the customer logs in sends a first activation code to the gateway.

S1209: The gateway registers with the server.

Specifically, after the gateway receives the first activation code sent by the client to which the customer logs in, the gateway may send the identifier of the gateway and the first activation code to the server. After receiving the identifier and the first activation code that are sent by the gateway, the server may query, in an activation code generation record of the server, whether the first activation code is allocated by the server. If the server determines that the first activation code is allocated by the server, the server may allow the gateway to register. In this case, the server may record information (for example, the identifier) about the gateway, and associate the gateway with the account of the customer. In addition, to avoid leakage of user data, the server may allocate an identifier representing an identity of the gateway to the gateway. The server may record the identifier and use the identifier as information about the gateway.

S12010: The server sends a registration result to the gateway.

S12011: The gateway sends a registration result to the client to which the customer logs in.

S12012: The server pushes device information of the gateway to the client to which the customer logs in.

S12013: The gateway requests, from the server in batches, second activation codes corresponding to smart devices.

Specifically, the gateway may send, to the server, identifiers of smart devices registered with the gateway, to request the second activation codes of the smart devices from the server in batches. The second activation codes mainly represent identities of the smart devices.

S12014: The server sends the second activation codes of the smart devices to the gateway.

Specifically, after receiving the identifiers of the smart devices, the server may randomly generate corresponding second activation codes based on the identifiers of the devices. For example, the second activation code may include a plurality of random numbers. After generating the second activation codes, the server may send the second activation codes to the gateway.

S12015: The gateway sends a second activation code of a smart device to the smart device.

S12016: The smart device registers with the server.

Specifically, after receiving the second activation code sent by the gateway, the smart device may send an identifier of the smart device and the second activation code to the server. After receiving the identifier and the activation code that are sent by the smart device, the server may query, in an activation code generation record of the server, whether the second activation code is allocated by the server. If the server determines that the second activation code is allocated by the server, the server may allow the smart device to register. In this case, the server may record information (for example, the identifier) about the smart device, and associate the smart device with the account of the customer. In addition, to avoid leakage of user data, the server may allocate an identifier representing an identity of the smart device to the smart device. The server may record the identifier and use the identifier as information about the smart device.

S12017: The server sends a registration result to the smart device.

S12018: The smart device sends a registration result to the gateway.

S12019: The server records a correspondence between the gateway, the smart device, and the account of the customer.

S12020: The server pushes device information of the smart device to the client to which the customer logs in.

In an example, after the gateway is registered with the server, the gateway may record information indicating that the gateway is registered, so that the gateway reports status information (for example, whether the gateway is online or a current operation parameter) of the gateway in real time or periodically. In addition, after the smart device is registered with the server, the smart device may also record information indicating that the smart device is registered, so that the smart device reports status information (for example, whether the smart device is online or a current operation parameter) of the smart device in real time or periodically. For example, the smart device is a smart desk lamp, and the smart desk lamp may report light brightness information or the like of the smart desk lamp to the server at intervals of preset time (for example, 30 minutes or 1 hour).

It can be understood that, in this embodiment of this application, the smart device needs to register with the server by using the second activation code, mainly to enable the server to determine whether the smart device is a counterfeit device. If the smart device is a counterfeit device, the server may prohibit registration of the smart device.

It can be understood that, when information on the server is updated, the server may push updated information to the client to which the customer logs in, so that the customer can learn of latest information in a timely manner.

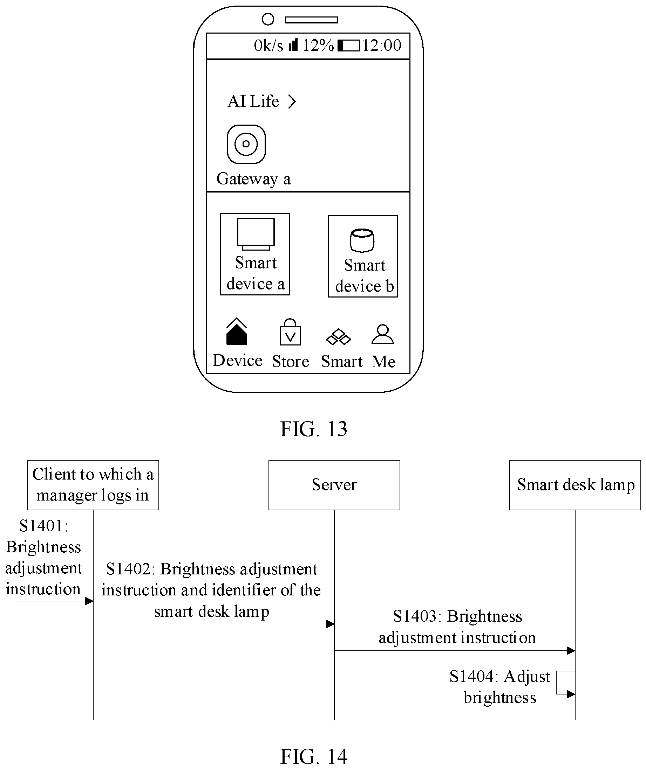

In this way, the customer completes device binding. In this case, the customer may view the gateway and the smart devices registered with the gateway on the client to which the customer logs in. For example, as shown in FIG. 13, a gateway a bound to the account of the customer and smart devices a and b that are registered with the gateway may be seen on the client to which the customer logs in.

Further, the customer may control the smart devices through the client to which the customer logs in.

For example, a process of controlling the smart devices by the customer is described by using an example in which the smart devices are smart desk lamps. As shown in FIG. 14, the process includes the following steps.

S1401: The client to which the customer logs in receives a brightness adjustment instruction delivered by the customer for a smart desk lamp.

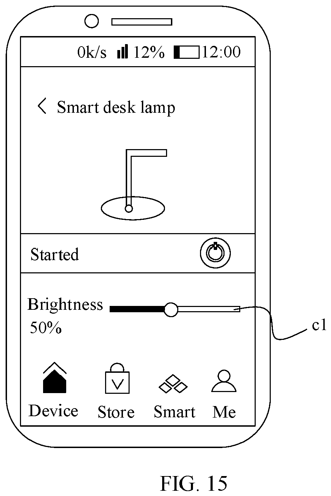

After logging in to the client, the customer may control a smart desk lamp belonging to a gateway to which the customer is bound. For example, the customer delivers a brightness adjustment instruction. For example, as shown in FIG. 15, the customer may adjust brightness of the smart desk lamp by using a brightness adjustment control in an area c1. After the customer adjusts the brightness, the client to which the customer logs in receives the brightness adjustment instruction delivered by the customer. For example, the brightness adjustment instruction may include a target brightness adjustment value, for example, indicating an adjustment to 60% of brightness.

S1402: The client to which the customer logs in sends a brightness adjustment instruction to the server.

S1403: The server sends a brightness adjustment instruction to the smart desk lamp.

S1404: The smart desk lamp adjusts brightness.

After receiving the brightness adjustment instruction, the smart desk lamp adjusts the brightness according to the brightness adjustment instruction.

In this way, the smart desk lamp is controlled.

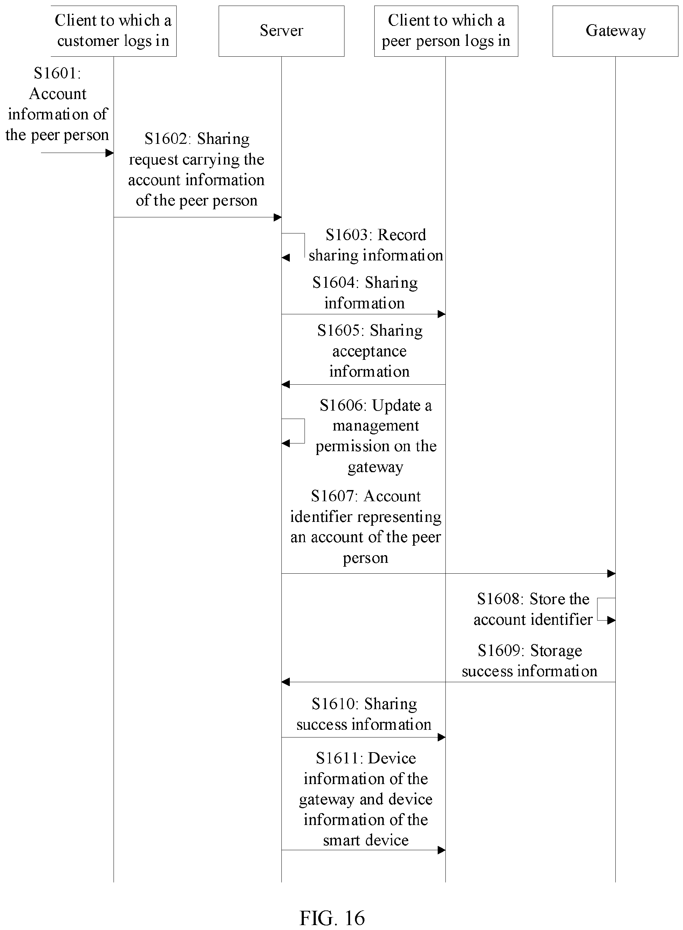

The step of sharing the device by the customer to a peer person in the smart home appliance control method provided in this application is described below in detail with reference to FIG. 16. After a customer who has checked in is bound to a device, the customer may share the bound device to a peer person of the customer. In an example, the peer person may not be able to be bound to or control the device by default, but can control the device only after the user who has checked in shares the device to the peer person. For example, FIG. 16 is a schematic flowchart of the step of sharing the device by the customer to a peer person in the smart home appliance control method provided in this embodiment of this application. As shown in FIG. 16, the step of sharing the device by the customer to a peer person may include the following steps.

S1601: The client to which the customer logs in obtains account information of the peer person.

Specifically, after the customer is bound to the device through the client to which the customer logs in by using an account and a password of the customer, the customer may initiate device sharing to an account of the peer person of the customer through the client to which the customer logs in. For example, after the customer enters the account information of the peer person on the client to which the customer logs in, the client to which the customer logs in obtains the account information of the peer person. For example, the customer may scan, by using the client to which the customer logs in, a graphic code (for example, a two-dimensional code) including the account information of the peer person, so that the client to which the customer logs in obtains the account information of the peer person.

S1602: The client to which the customer logs in sends a sharing request to the server. The sharing request carries the account information of the peer person.

S1603: The server records sharing information.

S1604: The server sends the sharing information to a client to which the peer person logs in.

Specifically, the server may send the sharing information to the account of the peer person. The peer person logs in to the client by using an account of the peer person. Therefore, after the server sends the sharing information to the account of the peer person, the client to which the peer person logs in may receive the sharing information.

S1605: The client to which the peer person logs in sends sharing acceptance information to the server in response to a sharing acceptance operation performed by the peer person.

Specifically, the client to which the peer person logs in may display the sharing information after receiving the sharing information, so that the peer person accepts sharing. After the peer person accepts the sharing, the client to which the peer person logs in may send the sharing acceptance information to the server.

S1606: The server updates a management permission on the gateway.

Specifically, the server may update the management permission on the gateway after the server receives the sharing acceptance information sent by the client to which the peer person logs in. For example, the server may change the management permission on the gateway from the account of the customer to the account of the customer and the account of the peer person, to update the management permission on the gateway.

S1607: The server sends, to the gateway, an account identifier representing a user account of the peer person.

S1608: The gateway stores the account identifier.

S1609: The gateway sends storage success information to the server.

S1610: The server sends sharing success information to the client to which the peer person logs in.

S1611: The server sends, to the client to which the peer person logs in, device information of the gateway and device information of a smart device registered with the gateway.

In this way, the gateway and the smart device belonging to the gateway can be viewed on the client to which the peer person logs in, and the smart device can be controlled.

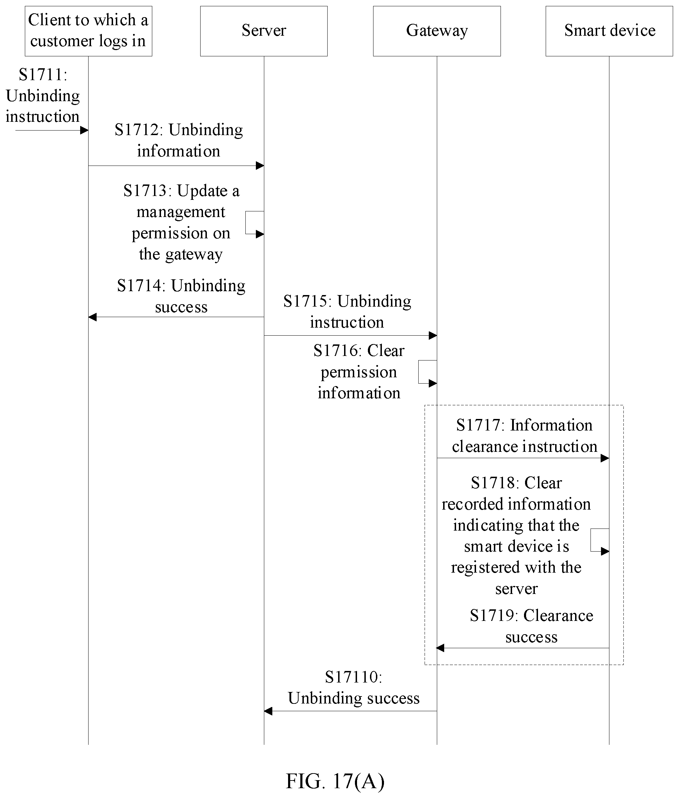

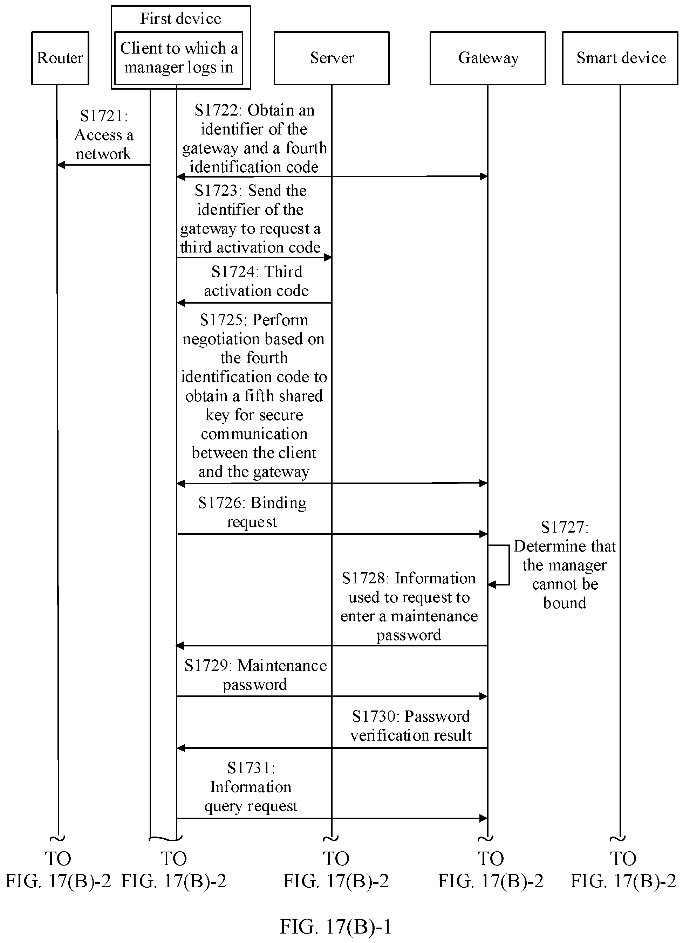

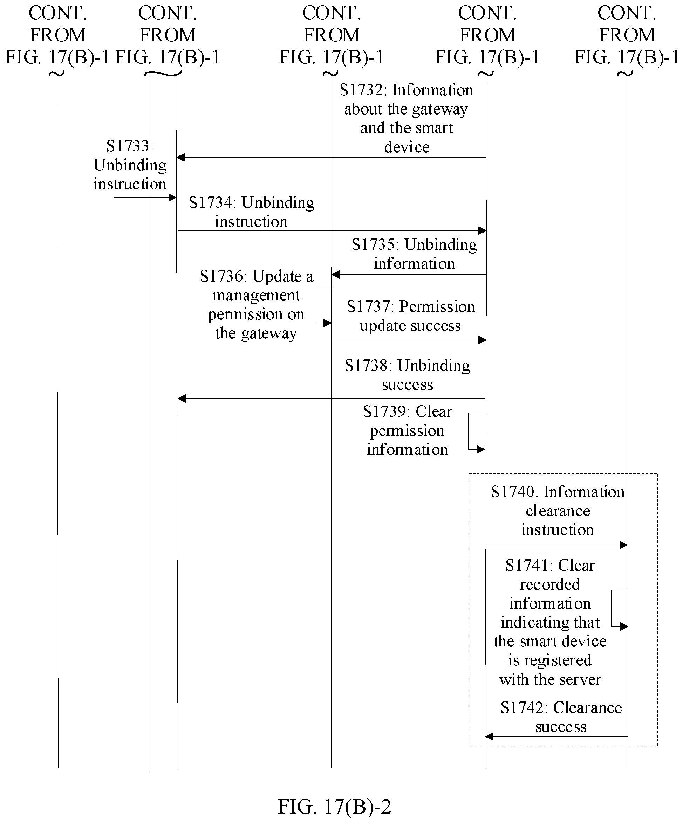

The step of unbinding the device by the customer or the hotel manager in the smart home appliance control method provided in this application is described below in detail with reference to FIG. 17(A), FIG. 17(B)-1, and FIG. 17(B)-2. The customer may actively unbind the device, or the hotel manager may unbind the customer from the device. For example, FIG. 17(A), FIG. 17(B)-1, and FIG. 17(B)-2 are a schematic flowchart of the step of unbinding the device by the customer or the hotel manager in the smart home appliance control method provided in this embodiment of this application.

For example, as shown in FIG. 17(A), the step of unbinding the device by the customer may include the following steps.

S1711: The client to which the customer logs in receives an unbinding instruction delivered by the customer for the gateway.

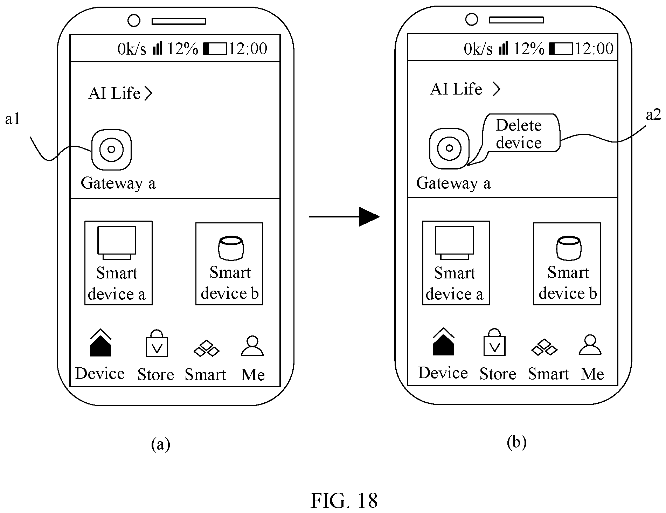

Specifically, the customer may unbind the gateway on the client to which the customer logs in. For example, as shown in (a) in the figure, the customer may select a gateway a in an area a1 on the client to which the customer logs in. Then a prompt for deleting a device may be displayed, that is, an interface shown in (b) in FIG. 18 may be displayed. Still as shown in (b) in FIG. 18, after the customer selects "Delete device" in an area a2, the client to which the customer logs in receives the unbinding instruction delivered by the customer for the gateway.

S1712: The client to which the customer logs in sends unbinding information to the server.

Specifically, after receiving the unbinding instruction delivered by the customer, the client to which the customer logs in may send, to the server, device information of the gateway from which the customer needs to be unbound. The device information of the gateway from which the customer needs to be unbound may include an identifier of the gateway.

S1713: The server updates a management permission on the gateway.

Specifically, the server may clear the management permission on the gateway. For example, before the server clears the management permission on the gateway, the management permission is that the customer can manage the gateway; and after the server clears the management permission on the gateway, the management permission may be empty, and in this case, the gateway is not controlled.

S1714: The server sends unbinding success information to the client to which the customer logs in.

Specifically, after the server updates the management permission on the gateway, the customer can no longer control the gateway or a smart device registered with the gateway. Then the server may send the unbinding success information to the client to which the customer logs in. After the client to which the customer logs in receives the unbinding success information, device information of the gateway and the smart device is no longer displayed on the client.

S1715: The server sends an unbinding instruction to the gateway.

S1716: The gateway clears permission information.

Specifically, after receiving the unbinding instruction delivered by the server, the gateway may clear account information stored on the gateway, to clear the permission information. In an example, if the gateway records information indicating that the gateway is registered with the server, the gateway may further clear the recorded information when clearing a permission.

S1717: The gateway sends an information clearance instruction to the smart device.

Specifically, if the smart device records information indicating that the smart device is registered with the server, the gateway may send the information clearance instruction to the smart device, so that the smart device clears the information recorded by the smart device and indicating that the smart device is registered with the server.

S1718: The smart device clears the information recorded by the smart device and indicating that the smart device is registered with the server.

S1719: The smart device sends a clearance success message to the gateway.

S17110: The gateway sends unbinding success information to the server.

It can be understood that, after the gateway sends unbinding failure information to the server, the server may send an unbinding instruction to the gateway again, that is, perform steps S1715 to S1719 again, until the server receives unbinding success information sent by the gateway.

In this way, the customer completes device unbinding.

For example, as shown in FIG. 17(B)-1 and FIG. 17(B)-2, the step of unbinding the device by the hotel manager may include the following steps.

S1721: The first device used by the manager accesses the network in the room to which the gateway belongs.

Specifically, when the manager unbinds the customer from the device, the manager may enter the room in which the customer stays, and connect the first device used by the manager to the network in the room. The first device may access a network provided by a router in the room to which the gateway belongs.

S1722: The client to which the manager logs in obtains the identifier of the gateway and a fourth identification code on the gateway.

Specifically, the manager may log in to the client by using a management account and password on the first device (for example, a mobile phone) on which the client is installed. Then the client to which the manager logs in may obtain the fourth identification code, for example, a personal identification number (personal identification number, PIN code), on the gateway with assistance of the manager. The fourth identification code may be randomly generated or preset on the gateway. This is not limited herein. For example, the manager may put the first device in contact with the gateway to obtain the fourth identification code. For details about a process of obtaining the fourth identification code, refer to the foregoing descriptions. Details are not described herein again.

S1723: The client to which the manager logs in requests a third activation code from the server.

Specifically, after obtaining the identifier of the gateway, the client to which the manager logs in may send the identifier of the gateway to the server, to request the third activation code from the server. The third activation code mainly represents an identity of the gateway.

S1724: The server sends the third activation code to the client to which the manager logs in.

Specifically, after receiving the request from the client to which the manager logs in, the server may randomly generate the third activation code based on the identifier of the gateway. For example, the third activation code may include a plurality of random numbers. After generating the third activation code, the server may send the third activation code to the client to which the manager logs in.

S1725: The client to which the manager logs in negotiates with the gateway based on the fourth identification code, to determine a fifth shared key required for secure communication between the client and the gateway.

Specifically, after obtaining the fourth identification code, the client to which the manager logs in may negotiate with the gateway based on the fourth identification code and a password authentication-based key exchange algorithm (simple password exponential key exchange, SPEKE), to determine the fifth shared key. For details, refer to the foregoing descriptions. Details are not described herein again.

It can be understood that, after the client to which the manager logs in and the gateway determine the fifth shared key through negotiation, subsequent communication information between the client and the gateway may be encrypted by using the fifth shared key and then transmitted to each other. For ease of description, encryption and decryption processes are not described in subsequent steps again.

S1726: The client to which the manager logs in sends a binding request to the gateway.

Specifically, after obtaining the fifth shared key, the client to which the manager logs in may encrypt the binding request based on the fifth shared key, and send an encrypted binding request to the gateway. The binding request requests to bind a management account for the client to which the manager logs in to the gateway. The binding request may carry a third account identifier representing the management account. For example, the third account identifier representing the management account may be a hash value obtained by performing hash calculation on the management account.

S1727: The gateway determines that the manager cannot be bound.

Specifically, after the gateway receives the binding request sent by the client to which the manager logs in, because the gateway is bound to the customer, the manager cannot be bound, and in this case, the gateway may determine that the manager cannot be bound.

S1728: The gateway sends, to the client to which the manager logs in, information used to request to enter a maintenance password.

S1729: The client to which the manager logs in sends the maintenance password to the gateway.

S1730: The gateway feeds back a password verification result.

S1731: The client to which the manager logs in sends an information query request to the gateway.

S1732: The gateway feeds back device information to the client to which the manager logs in.

Specifically, the gateway may send device information of the gateway and device information of a smart device registered with the gateway to the client to which the manager logs in, so that the client to which the manager logs in can present the gateway and the smart device registered with the gateway to a user, to maintain the gateway and the smart device registered with the gateway.

S1733: The client to which the manager logs in receives an unbinding instruction delivered by the manager for the gateway.

Specifically, the manager may unbind the customer from the gateway on the client to which the manager logs in. For example, as shown in (a) in FIG. 18, the manager may select a gateway a in an area a1 on the client to which the customer logs in. Then a prompt for deleting a device may be displayed, that is, an interface shown in (b) in FIG. 18 may be displayed. Still as shown in (b) in FIG. 18, after the manager selects "Delete device" in an area a2, the client to which the manager logs in receives the unbinding instruction delivered by the manager for the gateway.

S1734: The client to which the manager logs in sends an unbinding instruction to the gateway.

S1735: The gateway sends unbinding information to the server.

Specifically, after receiving the unbinding instruction delivered by the client to which the manager logs in, the gateway may send the device information of the gateway to the server. The device information of the gateway may include an identifier of the gateway.

S1736: The server updates a management permission on the gateway.

S1737: The server sends permission update success information to the gateway.

Specifically, after the server updates the management permission on the gateway, the customer can no longer control the gateway or the smart device registered with the gateway. In this case, it can be understood that the unbinding is successful. Therefore, the server may send the permission update success information to the gateway.

S1738: The gateway sends unbinding success information to the client to which the manager logs in.

Specifically, after receiving the unbinding success information sent by the server, the gateway may send the unbinding success information to the client to which the manager logs in.

It can be understood that, if the gateway receives permission update failure information sent by the server, the gateway may re-send unbinding information to the server.

S1739: The gateway clears permission information.

Specifically, after receiving the permission update success information sent by the server, the gateway may clear account information stored on the gateway, to clear the permission information. In an example, if the gateway records information indicating that the gateway is registered with the server, the gateway may further clear the recorded information when clearing a permission.

S1740: The gateway sends an information clearance instruction to the smart device.

Specifically, if the smart device records information indicating that the smart device is registered with the server, the gateway may send the information clearance instruction to the smart device, so that the smart device clears the information recorded by the smart device and indicating that the smart device is registered with the server.

S1741: The smart device clears the information recorded by the smart device and indicating that the smart device is registered with the server.

S1742: The smart device sends a clearance success message to the gateway.

In this way, the hotel manager unbinds the customer from the device.

It should be noted that S1722 to S1732 may alternatively be understood as a process of maintaining the device by the manager. After S1732, the manager may view information about the gateway and the smart device registered with the gateway. In this case, the manager may maintain the gateway and the smart device registered with the gateway, for example, repair the device.

It can be understood that, in this embodiment of this application, a device used by the manager needs to perform near field communication with the gateway to obtain the information about the gateway and the smart device registered with the gateway. Therefore, the manager cannot remotely obtain information about a device used by a user. This ensures security of user privacy. For example, there is a camera device in a room. In this case, the manager can obtain information about the camera device only by performing short-range communication with a gateway in the room through the device used by the manager. However, when a customer stays in the room, the manager cannot enter the room freely. Therefore, the manager cannot obtain the information about the camera device freely. This protects user privacy and avoids leakage of user privacy.

It should be noted that, in this embodiment of this application, all the operations performed by the client may be understood as operations performed by a device on which the client is located.

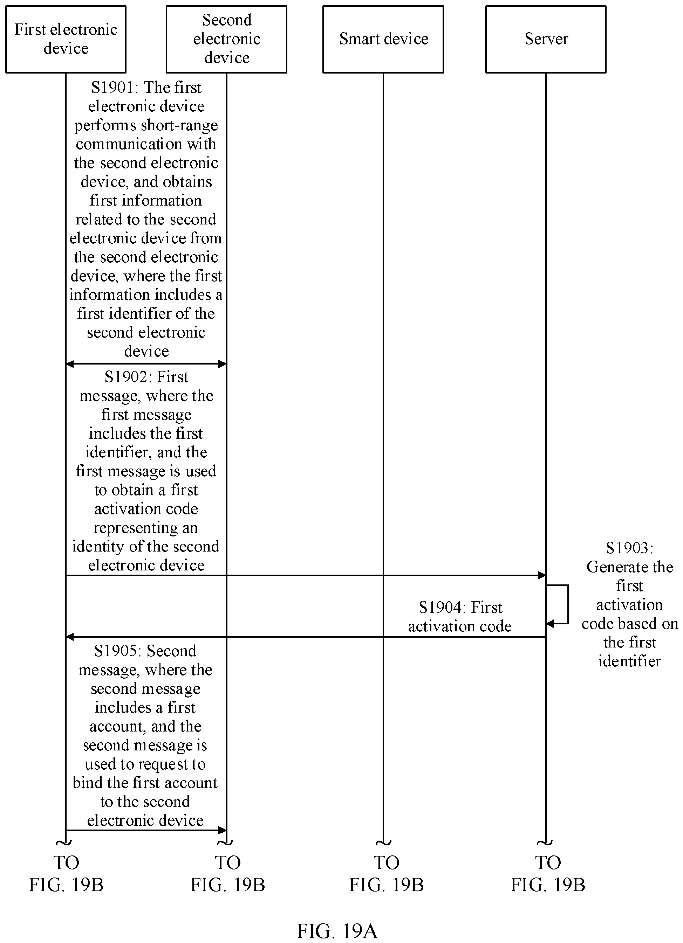

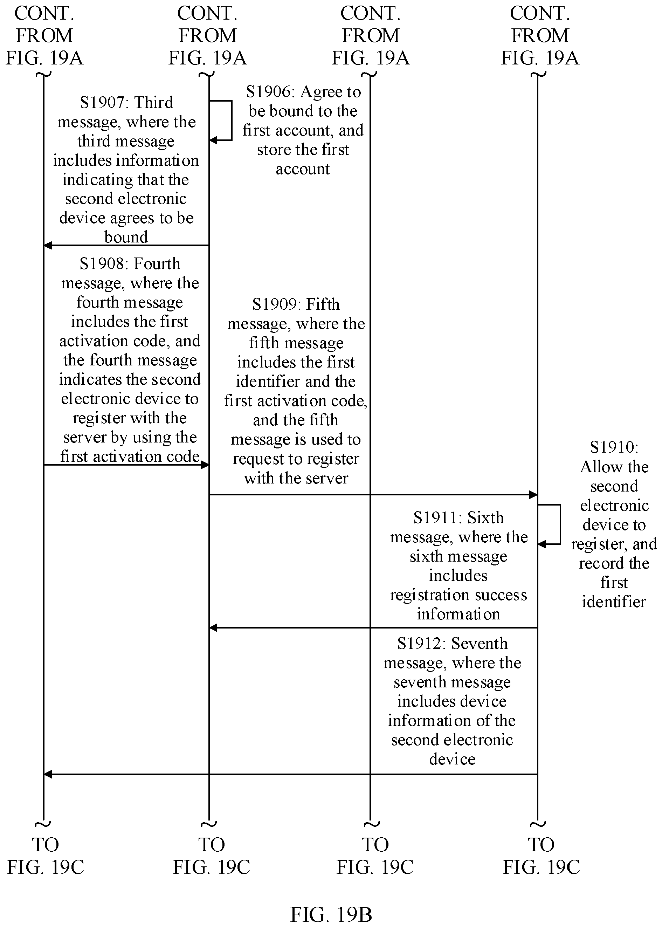

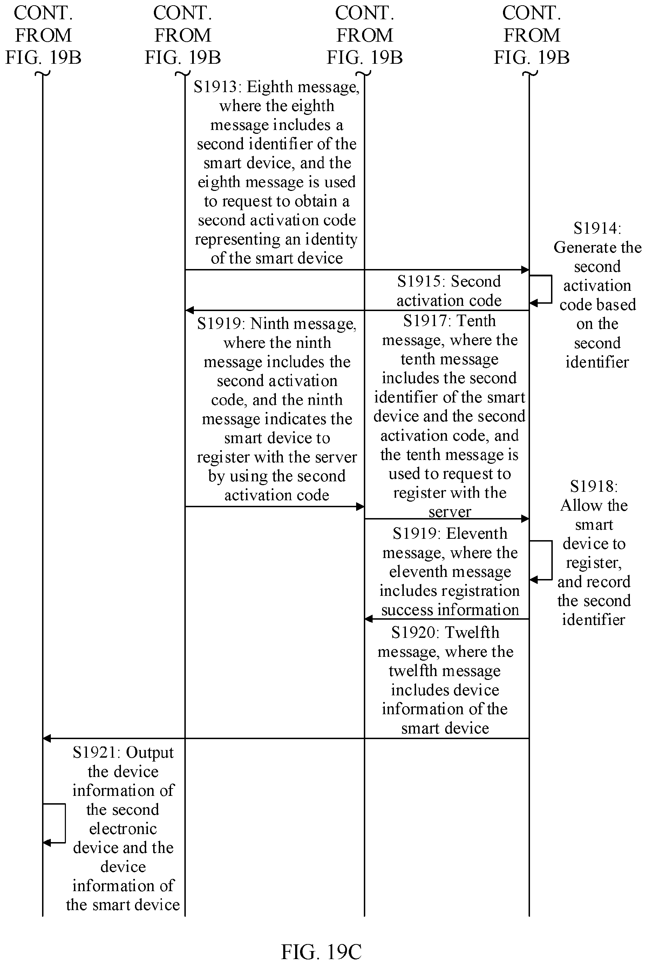

For example, FIG. 19A, FIG. 19B, and FIG. 19C are a schematic flowchart of another smart home appliance control method. In FIG. 19A, FIG. 19B, and FIG. 19C, a client related to smart home appliance control is installed on a first electronic device, a first account is logged in to the client, and the client corresponds to a server. The first electronic device may perform short-range communication with a second electronic device, and the second electronic device may perform long-range communication with the server. n smart devices are pre-registered with the second electronic device. In other words, the n smart devices are pre-bound to the second electronic device. In addition, the second electronic device and the n smart devices are located in one local area network, where n is a positive integer greater than or equal to 1. In an example, the second electronic device may be a gateway, or an electronic device integrated with a gateway function, and may be understood as an entrance for the first electronic device to access a smart home system to which the second electronic device belongs. For example, when the second electronic device is an electronic device with a gateway function, the second electronic device may be a hub device, for example, a smart speaker, a smart television, or a smart screen. For example, the first electronic device may be the device used by the customer in the foregoing descriptions. For example, the first electronic device may be the mobile phone 15 described in FIG. 1, the second electronic device may be the gateway 11 described in FIG. 1, the smart devices may be the smart speaker 12, the smart desk lamp 13, and the smart television 14 described in FIG. 1, and the server may be the server 16 described in FIG. 1.

As shown in FIG. 19A, FIG. 19B, and FIG. 19C, the smart home appliance control method may include the following steps.

S1901: The first electronic device performs short-range communication with the second electronic device, and obtains first information related to the second electronic device from the second electronic device, where the first information includes a first identifier of the second electronic device.

Specifically, the first electronic device may get in contact with the second electronic device or scan a graphic code on the second electronic device to obtain the first identifier of the second electronic device. For details about a process of obtaining the first identifier, refer to the foregoing descriptions. Details are not described herein again.

S1902: The first electronic device sends a first message to the server, where the first message includes the first identifier, and the first message is used to obtain a first activation code representing an identity of the second electronic device.

Specifically, after obtaining the first identifier of the second electronic device, the first electronic device may send the first identifier to the server, to obtain the first activation code representing the identity of the second electronic device from the server.

S1903: The server generates the first activation code based on the first identifier in response to the first message.

Specifically, after receiving the first message, the server may randomly generate the first activation code based on the first identifier. For example, the first activation code may include a plurality of random numbers.

S1904: The server sends the first activation code to the first electronic device.

S1905: The first electronic device sends a second message to the second electronic device, where the second message includes the first account, and the second message is used to request to bind the first account to the second electronic device.

Specifically, after obtaining the first activation code, the first electronic device may send the second message including the first account to the second electronic device, to request to bind the first account to the second electronic device. For example, the second message may be understood as a message related to a binding request.

S1906: In response to the second message, the second electronic device agrees to be bound to the first account, and stores the first account.

Specifically, after the second electronic device receives the second message, if the second electronic device stores no account information, the second electronic device may agree to be bound to the first account, and store the first account.

S1907: The second electronic device sends a third message to the first electronic device, where the third message includes information indicating that the second electronic device agrees to be bound.

S1908: The first electronic device sends a fourth message to the second electronic device in response to the third message, where the fourth message includes the first activation code, and the fourth message indicates the second electronic device to register with the server by using the first activation code.

S1909: The second electronic device sends a fifth message to the server in response to the fourth message, where the fifth message includes the first identifier and the first activation code, and the fifth message is used to request to register with the server.

Specifically, after receiving the message including the first activation code, the second electronic device may send the message including the first identifier and the first activation code to the server, to request to register with the server.

S1910: In response to the fifth message, the server allows the second electronic device to register, and records the first identifier.

Specifically, the server may query, in an activation code generation record of the server, whether the first activation code is allocated by the server. If the server determines that the first activation code is allocated by the server, the server may allow the second electronic device to register. In this case, the server may record information (for example, the first identifier) about the second electronic device, and associate the second electronic device with an account of a customer. In addition, to avoid leakage of user data, the server may allocate an identifier representing an identity of the second electronic device to the second electronic device. The server may record the identifier and use the identifier as information about the second electronic device.

S1911: The server sends a sixth message to the second electronic device, where the sixth message includes registration success information.

S1912: The server sends a seventh message to the first electronic device, where the seventh message includes device information of the second electronic device.

S1913: The second electronic device sends an eighth message to the server in response to the sixth message, where the eighth message includes second identifiers of the n smart devices, the eighth message is used to request to obtain n second activation codes representing identities of the n smart devices, and one second activation code corresponds to one smart device.

Specifically, after the second electronic device is registered with the server, the second electronic device may request, from the server in batches, the second activation codes corresponding to the smart devices, so that the smart devices can be subsequently registered with the server.

S1914: The server generates the n second activation codes based on the second identifiers of the n smart devices in response to the eighth message.

Specifically, after receiving the eighth message, the server may randomly generate, based on the second identifiers of the smart devices, the second activation codes corresponding to the smart devices. For example, the second activation code may include a plurality of random numbers.

S1915: The server sends the n second activation codes to the second electronic device.

S1919: The second electronic device sends a ninth message to a smart device, where the ninth message includes a second activation code, and the ninth message indicates the smart device to register with the server by using the second activation code.

S1917: The smart device sends a tenth message to the server in response to the ninth message, where the tenth message includes a second identifier of the smart device and the second activation code, and the tenth message is used to request to register with the server.

S1918: In response to the tenth message, the server allows the smart device to register, and records the second identifier.

Specifically, the server may query, in an activation code generation record of the server, whether the second activation code is allocated by the server. If the server determines that the second activation code is allocated by the server, the server may allow the smart device to register. In this case, the server may record information (for example, the second identifier) about the smart device, and associate the smart device with the account of the customer. In addition, to avoid leakage of user data, the server may allocate an identifier representing an identity of the smart device to the smart device. The server may record the identifier and use the identifier as information about the smart device. S1919: The server sends an eleventh message to the smart device, where the eleventh message includes registration success information.

S1920: The server sends a twelfth message to the first electronic device, where the twelfth message includes device information of the smart device. It can be understood that the seventh message and the twelfth message may be sent separately, or may be combined and sent together. This is not limited herein.

S1921: The first electronic device outputs the device information of the second electronic device and the device information of the smart device.

Specifically, the first electronic device may output the device information of the second electronic device and the device information of the smart device, so that a user can view the second electronic device and the smart device. For example, the first electronic device may display the device information of the second electronic device and the device information of the smart device, or may broadcast the device information of the second electronic device and the device information of the smart device through text-to-speech. For example, when the seventh message and the twelfth message are sent separately, the first electronic device may display the device information of the second electronic device when receiving the seventh message, and display the device information of the smart device when receiving the twelfth message. When the seventh message and the twelfth message are sent together, the first electronic device may display the device information of the second electronic device and the device information of the smart device at the same time when receiving the seventh message and the twelfth message, or may display the device information of the second electronic device and the device information of the smart device at different time. This is not limited herein.

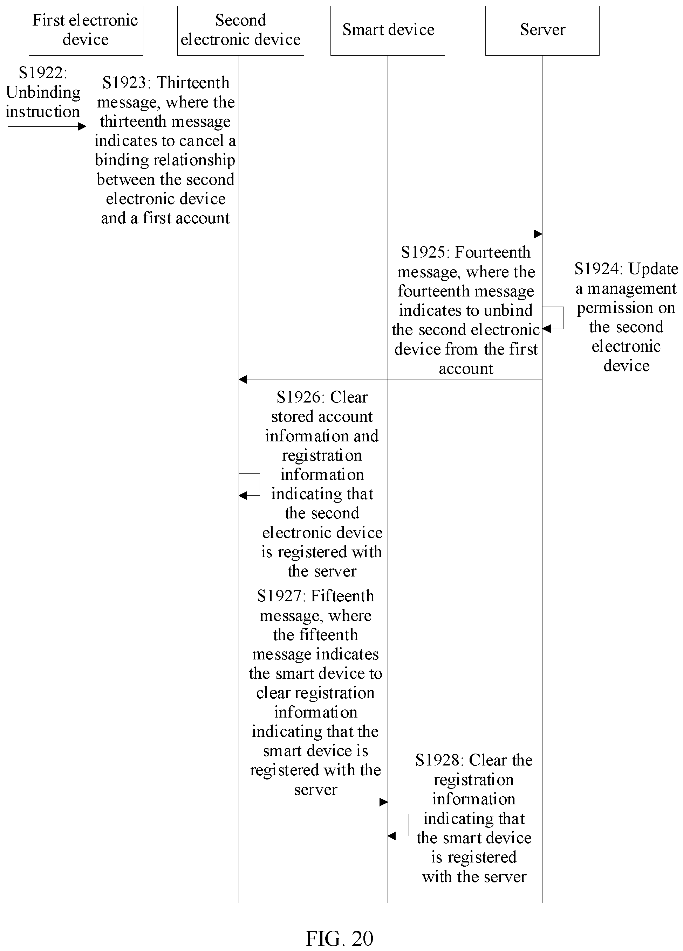

Further, after S1921, the second electronic device and/or the smart device may be controlled. An example in which the first account is unbound from the second electronic device is used. For example, as shown in FIG. 20, an unbinding process may include the following steps.

S1922: The first electronic device receives an unbinding instruction.

S1923: The first electronic device sends a thirteenth message to the server, where the thirteenth message indicates to cancel a binding relationship between the second electronic device and the first account.

S1924: The server updates a management permission on the second electronic device in response to the thirteenth message.

Specifically, the server may clear the management permission on the second electronic device. For example, before the server clears the management permission on the second electronic device, the management permission is that the customer can manage the second electronic device; and after the server clears the management permission on the second electronic device, the management permission may be empty, and in this case, the second electronic device is not controlled.

S1925: The server sends a fourteenth message to the second electronic device, where the fourteenth message indicates to unbind the second electronic device from the first account.

S1926: In response to the fourteenth message, the second electronic device clears stored account information and registration information indicating that the second electronic device is registered with the server.

Specifically, when being unbound from an account, the second electronic device may clear account information stored on the second electronic device to implement unbinding. In addition, the second electronic device may also clear the registration information indicating that the second electronic device is registered with the server, so that the second electronic device no longer feeds back device information to the server.

S1927: The second electronic device sends a fifteenth message to the smart device, where the fifteenth message indicates the smart device to clear registration information indicating that the smart device is registered with the server.

S1928: In response to the fifteenth message, the smart device clears the registration information indicating that the smart device is registered with the server.

Specifically, the smart device may clear the registration information indicating that the smart device is registered with the server, so that the smart device no longer feeds back device information to the server.

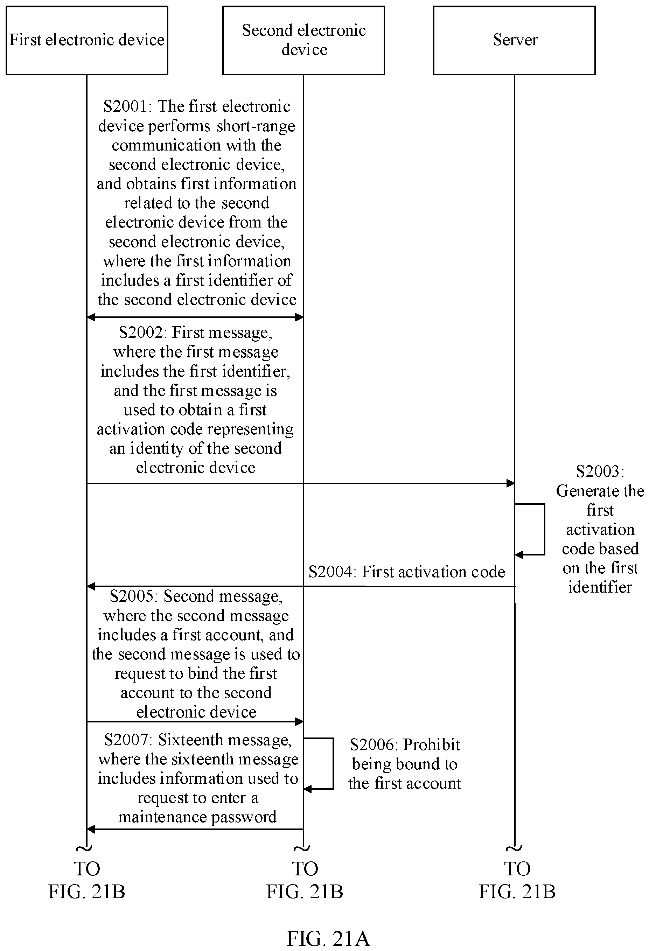

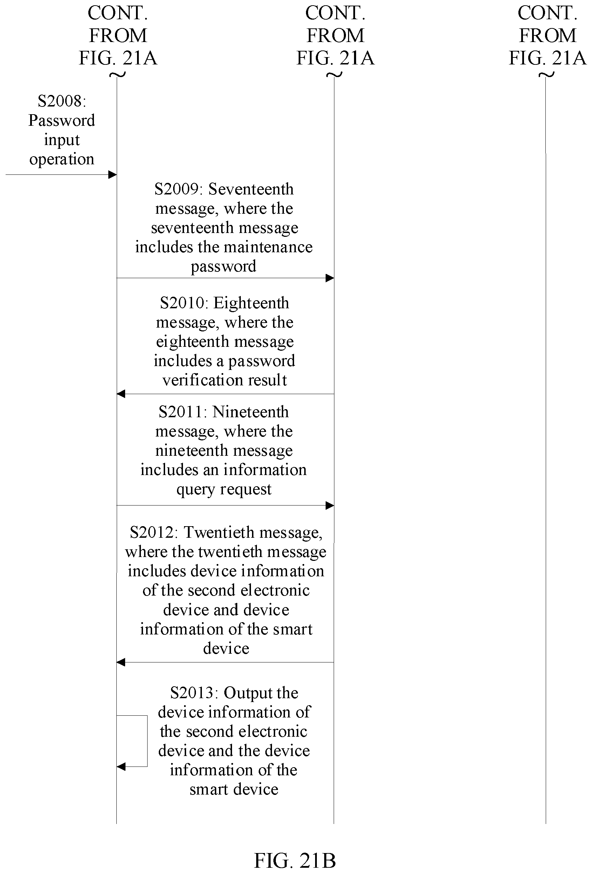

For example, FIG. 21A and FIG. 21B are a schematic flowchart of still another smart home appliance control method. In FIG. 21A and FIG. 21B, a client related to smart home appliance control is installed on a first electronic device, a first account is logged in to the client, and the client corresponds to a server. The first electronic device may perform short-range communication with a second electronic device, and the second electronic device may perform long-range communication with the server. n smart devices are pre-registered with the second electronic device. In other words, the n smart devices are pre-bound to the second electronic device. In addition, the second electronic device and the n smart devices are located in one local area network, where n is a positive integer greater than or equal to 1. In an example, the second electronic device may be a gateway, or an electronic device integrated with a gateway function, and may be understood as an entrance for the first electronic device to access a smart home system to which the second electronic device belongs. For example, when the second electronic device is an electronic device with a gateway function, the second electronic device may be a hub device, for example, a smart speaker, a smart television, or a smart screen. For example, the first electronic device may be the device used by the manager in the foregoing descriptions, the second electronic device may be the gateway 11 described in FIG. 1, the smart devices may be the smart speaker 12, the smart desk lamp 13, and the smart television 14 described in FIG. 1, and the server may be the server 16 described in FIG. 1.

As shown in FIG. 21A and FIG. 21B, the smart home appliance control method may include the following steps.

S2001: The first electronic device performs short-range communication with the second electronic device, and obtains first information related to the second electronic device from the second electronic device, where the first information includes a first identifier of the second electronic device.

S2002: The first electronic device sends a first message to the server, where the first message includes the first identifier, and the first message is used to obtain a first activation code representing an identity of the second electronic device.

S2003: The server generates the first activation code based on the first identifier in response to the first message. S2004: The server sends the first activation code to the first electronic device.

S2005: The first electronic device sends a second message to the second electronic device, where the second message includes the first account, and the second message is used to request to bind the first account to the second electronic device.

S2006: In response to the second message, the second electronic device prohibits being bound to the first account.

Specifically, after the second electronic device receives the second message, if the second electronic device stores account information and the account information does not include the first account, the second electronic device may prohibit being bound to the first account, to prevent the second electronic device from being bound to a plurality of persons. It can be understood that, if the second electronic device is bound to an account, a user may share the second electronic device to another user through device sharing, so that the second electronic device is bound to a plurality of persons.

S2007: The second electronic device sends a sixteenth message to the first electronic device, where the sixteenth message includes information used to request to enter a maintenance password.

S2008: The first electronic device receives a password input operation.

S2009: The first electronic device sends a seventeenth message to the second electronic device, where the seventeenth message includes the maintenance password.

S2010: The second electronic device sends an eighteenth message to the first electronic device in response to the seventeenth message, where the eighteenth message includes a password verification result.

Specifically, after receiving the maintenance password, the second electronic device may compare the maintenance password with a password that is set by the manager and that is stored on the second electronic device. When the two passwords are the same, verification succeeds.

S2011: The first electronic device sends a nineteenth message to the second electronic device in response to the eighteenth message, where the nineteenth message includes an information query request.

S2012: The second electronic device sends a twentieth message to the first electronic device in response to the nineteenth message, where the twentieth message includes device information of the second electronic device and device information of the smart device.

S2013: The first electronic device outputs the device information of the second electronic device and the device information of the smart device in response to the twentieth message.

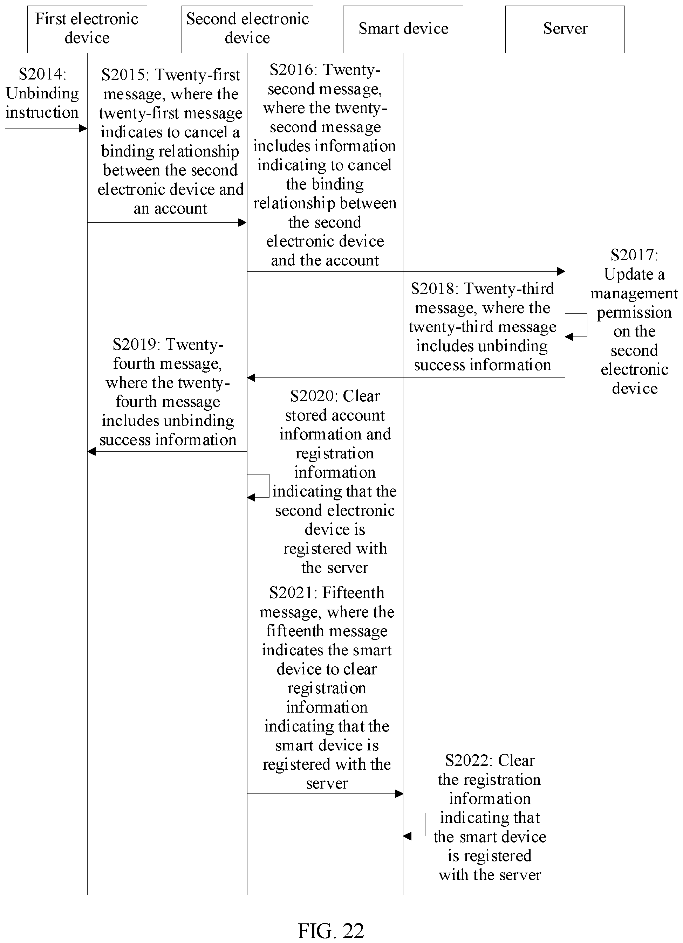

Further, after S2013, the second electronic device and/or the smart device may be controlled. For example, a binding relationship between the second electronic device and an account is canceled. An example in which an account is unbound from the second electronic device is used. For example, as shown in FIG. 22, an unbinding process may include the following steps.

S2014: The first electronic device receives an unbinding instruction.

S2015: The first electronic device sends a twenty-first message to the second electronic device, where the twenty-first message indicates to cancel a binding relationship between the second electronic device and an account.

S2016: The second electronic device sends a twenty-second message to the server in response to the twenty-first message, where the twenty-second message includes information indicating to cancel the binding relationship between the second electronic device and the account.

S2017: The server updates a management permission on the second electronic device in response to the twenty-second message.

S2018: The server sends a twenty-third message to the second electronic device, where the twenty-third message includes unbinding success information.

S2019: The second electronic device sends a twenty-fourth message to the first electronic device in response to the twenty-third message, where the twenty-fourth message includes unbinding success information.

S2020: The second electronic device clears stored account information and registration information indicating that the second electronic device is registered with the server.

S2021: The second electronic device sends a fifteenth message to the smart device, where the fifteenth message indicates the smart device to clear registration information indicating that the smart device is registered with the server.

S2022: In response to the fifteenth message, the smart device clears the registration information indicating that the smart device is registered with the server.

It can be understood that all or some of any features in any embodiment of this application may be freely and randomly combined with each other in the case of no conflict. A combined technical solution also falls within the scope of this application.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by a processor executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of processes or functions according to embodiments of this application are generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It can be understood that various numbers in embodiments of this application are merely used for differentiation for ease of description, and are not intended to limit the scope of embodiments of this application.

## Claims

1. A smart home control method, wherein the method is applied to a first electronic device, a client is configured on the first electronic device, a first account is logged in to the client, the client corresponds to a server, and the method comprises:
performing, by the first electronic device, short-range communication with a second electronic device, and obtaining first information related to the second electronic device from the second electronic device, wherein the first information comprises a first identifier of the second electronic device, n smart devices are registered with the second electronic device, the second electronic device and the n smart devices are located in one local area network, and n is a positive integer greater than or equal to 1;
sending, by the first electronic device, a first message to the server, wherein the first message comprises the first identifier, and the first message is used to obtain a first activation code representing an identity of the second electronic device;
receiving, by the first electronic device, the first activation code sent by the server;
sending, by the first electronic device, a second message to the second electronic device, wherein the second message comprises the first account, and the second message is used to request to bind the first account to the second electronic device;
sending, by the first electronic device, a fourth message to the second electronic device in response to a received third message sent by the second electronic device, wherein the third message comprises information indicating that the second electronic device agrees to be bound, the fourth message comprises the first activation code, and the fourth message indicates the second electronic device to register with the server by using the first activation code;
receiving, by the first electronic device, a seventh message and a twelfth message that are sent by the server, wherein the seventh message comprises device information of the second electronic device, the twelfth message comprises device information of the n smart devices, the seventh message is sent by the server when the second electronic device is registered with the server, and the twelfth message is sent by the server when the n smart devices are registered with the server in response to a registration instruction sent by the second electronic device; and
outputting, by the first electronic device, the device information of the second electronic device and the device information of the n smart devices.

2. The method according to claim 1, wherein after the outputting, by the first electronic device, the device information of the second electronic device and the device information of the n smart devices, the method further comprises:
sending, by the first electronic device, device sharing information to the server in response to a received device sharing operation, wherein the device sharing information comprises a to-be-shared account, and the device sharing information indicates the server to bind the to-be-shared account to the second electronic device.

3. The method according to claim 1 or 2, wherein after the outputting, by the first electronic device, the device information of the second electronic device and the device information of the n smart devices, the method further comprises:
sending, by the first electronic device, a thirteenth message to the server in response to a received unbinding instruction for unbinding from the second electronic device, wherein the thirteenth message indicates to cancel a binding relationship between the second electronic device and the first account.

4. The method according to any one of claims 1 to 3, wherein the outputting, by the first electronic device, the device information of the second electronic device and the device information of the n smart devices comprises:
displaying, by the first electronic device, the device information of the second electronic device and the device information of the n smart devices, and/or playing, by the first electronic device, the device information of the second electronic device and the device information of the n smart devices through voice.

5. A smart home control method, wherein the method is applied to a second electronic device, n smart devices are registered with the second electronic device, the second electronic device and the n smart devices are located in one local area network, n is a positive integer greater than or equal to 1, and the method comprises:
performing, by the second electronic device, short-range communication with a first electronic device, and sending first information to the first electronic device, wherein the first information comprises a first identifier of the second electronic device, a client is configured on the first electronic device, a first account is logged in to the client, and the client corresponds to a server;
receiving, by the second electronic device, a second message sent by the first electronic device, wherein the second message comprises the first account, and the second message is used to request to bind the first account to the second electronic device;
storing, by the second electronic device, the first account, and sending a third message to the first electronic device, wherein the third message comprises information indicating that the second electronic device agrees to be bound;
receiving, by the second electronic device, a fourth message sent by the first electronic device, wherein the fourth message comprises a first activation code, the fourth message indicates the second electronic device to register with the server by using the first activation code, the first activation code is generated by the server when the server receives a first message sent by the first electronic device, the first message comprises the first identifier, and the first activation code represents an identity of the second electronic device;
sending, by the second electronic device, a fifth message to the server, wherein the fifth message comprises the first identifier and the first activation code, and the fifth message is used to request to register the second electronic device with the server;
sending, by the second electronic device, an eighth message to the server in response to a received sixth message sent by the server, wherein the sixth message comprises registration success information, the eighth message comprises second identifiers of the n smart devices, and the eighth message is used to request to obtain n second activation codes representing identities of the n smart devices;
receiving, by the second electronic device, the n second activation codes sent by the server, wherein one second activation code corresponds to one smart device; and
sending, by the second electronic device, a ninth message to each of the n smart devices, wherein the ninth message comprises a second activation code corresponding to the smart device, and the ninth message indicates the smart device to register with the server by using the second activation code corresponding to the smart device.

6. The method according to claim 5, wherein after the sending, by the second electronic device, a ninth message to each of the n smart devices, the method further comprises:
receiving a to-be-shared account sent by the server, and storing the to-be-shared account.

7. The method according to claim 5 or 6, wherein after the sending, by the second electronic device, a ninth message to each of the n smart devices, the method further comprises:
receiving, by the second electronic device, a fourteenth message sent by the server, wherein the fourteenth message indicates to unbind the second electronic device from the first account; and
in response to the fourteenth message, clearing, by the second electronic device, stored account information and registration information indicating that the second electronic device is registered with the server.

8. The method according to claim 7, wherein the method further comprises:
sending, by the second electronic device, a fifteenth message to each of the n smart devices, wherein the fifteenth message indicates the smart device to clear registration information indicating that the smart device is registered with the server.

9. A smart home control method, wherein the method is applied to a first electronic device, a client is configured on the first electronic device, a first account is logged in to the client, the client corresponds to a server, and the method comprises:
performing, by the first electronic device, short-range communication with a second electronic device, and obtaining first information related to the second electronic device from the second electronic device, wherein the first information comprises a first identifier of the second electronic device, n smart devices are registered with the second electronic device, the second electronic device and the n smart devices are located in one local area network, and n is a positive integer greater than or equal to 1;
sending, by the first electronic device, a first message to the server, wherein the first message comprises the first identifier, and the first message is used to obtain a first activation code representing an identity of the second electronic device;
receiving, by the first electronic device, the first activation code sent by the server;
sending, by the first electronic device, a second message to the second electronic device, wherein the second message comprises the first account, and the second message is used to request to bind the first account to the second electronic device;
receiving, by the first electronic device, a sixteenth message sent by the second electronic device, wherein the sixteenth message comprises information used to request to enter a maintenance password, and the sixteenth message is sent by the second electronic device when the second electronic device determines that the second electronic device stores account information related to a user account and the account information does not comprise the first account;
sending, by the first electronic device, a seventeenth message to the second electronic device in response to a received password input operation, wherein the seventeenth message comprises the maintenance password;
receiving, by the first electronic device, a twentieth message sent by the second electronic device, wherein the twentieth message comprises device information of the second electronic device and device information of the n smart devices; and
outputting, by the first electronic device, the device information of the second electronic device and the device information of the n smart devices.

10. The method according to claim 9, wherein after the outputting, by the first electronic device, the device information of the second electronic device and the device information of the n smart devices, the method further comprises:
sending, by the first electronic device, a twenty-first message to the second electronic device in response to a received unbinding instruction, wherein the twenty-first message indicates to cancel a binding relationship between the second electronic device and an account stored on the second electronic device.

11. A smart home control method, wherein the method is applied to a second electronic device, n smart devices are registered with the second electronic device, the second electronic device and the n smart devices are located in one local area network, n is a positive integer greater than or equal to 1, and the method comprises:
performing, by the second electronic device, short-range communication with a first electronic device, and sending first information to the first electronic device, wherein the first information comprises a first identifier of the second electronic device, a client is configured on the first electronic device, a first account is logged in to the client, and the client corresponds to a server;
receiving, by the second electronic device, a second message sent by the first electronic device, wherein the second message comprises the first account, and the second message is used to request to bind the first account to the second electronic device;
determining, by the second electronic device, that the second electronic device stores account information related to a user account and the account information does not comprise the first account, and sending a sixteenth message to the first electronic device, wherein the sixteenth message comprises information used to request to enter a maintenance password; and
verifying, by the second electronic device, the maintenance password in response to a seventeenth message sent by the first electronic device, wherein the seventeenth message comprises the maintenance password, and when the verification succeeds, sending device information of the second electronic device and device information of the n smart devices to the first electronic device.

12. The method according to claim 11, wherein after the sending, by the second electronic device, device information of the second electronic device and device information of the n smart devices to the first electronic device, the method further comprises:
receiving, by the second electronic device, a twenty-first message sent by the first electronic device, wherein the twenty-first message indicates to cancel a binding relationship between the second electronic device and an account stored on the second electronic device;
sending, by the second electronic device, a twenty-second message to the server in response to the twenty-first message, wherein the twenty-second message indicates the server to cancel the binding relationship between the second electronic device and the account stored on the second electronic device; and
in response to a twenty-third message sent by the server, wherein the twenty-third message comprises unbinding success information, clearing, by the second electronic device, account information stored on the second electronic device and registration information indicating that the second electronic device is registered with the server.

13. The method according to claim 12, wherein the method further comprises:
sending, by the second electronic device, a fifteenth message to each of the n smart devices, wherein the fifteenth message indicates the smart device to clear registration information indicating that the smart device is registered with the server.

14. A smart home control method, wherein the method is applied to a server, the server corresponds to a client, a first account is logged in to the client, the client is configured on a first electronic device, and the method comprises:
receiving, by the server, a first message sent by the first electronic device, wherein the first message comprises a first identifier of a second electronic device, the first message is used to obtain a first activation code representing an identity of the second electronic device, the first identifier is obtained by the first electronic device through short-range communication with the second electronic device, n smart devices are registered with the second electronic device, the second electronic device and the n smart devices are located in one local area network, and n is a positive integer greater than or equal to 1; and
generating, by the server, the first activation code based on the first identifier, and sending the first activation code to the first electronic device.

15. The method according to claim 14, wherein after the sending, by the server, the first activation code to the first electronic device, the method further comprises:
receiving, by the server, a fifth message sent by the second electronic device, wherein the fifth message comprises the first identifier and the first activation code, and the fifth message is used to request to register the second electronic device with the server;
verifying, by the server, the first activation code, recording the first identifier when the verification succeeds, and sending a sixth message to the second electronic device, wherein the sixth message comprises registration success information;
receiving, by the server, an eighth message sent by the second electronic device, wherein the eighth message comprises second identifiers of the n smart devices, and the eighth message is used to obtain n second activation codes representing identities of the n smart devices;
generating, by the server, the n second activation codes based on all of the n second identifiers, and sending the n second activation codes to the second electronic device;
receiving, by the server, n tenth messages sent by the n smart devices, wherein each tenth message comprises a second identifier and a second activation code of one smart device, and the tenth message is used to request to register the smart device with the server;
verifying, by the server, each of the n second activation codes, and recording a second identifier of each of the n smart devices when the verification succeeds; and
sending, by the server, a seventh message and a twelfth message to the first electronic device, wherein the seventh message comprises device information of the second electronic device, and the twelfth message comprises device information of the n smart devices.

16. The method according to claim 15, wherein after the sending, by the server, a seventh message and a twelfth message to the first electronic device, the method further comprises:
receiving, by the server, a thirteenth message sent by the first electronic device, wherein the thirteenth message indicates to cancel a binding relationship between the second electronic device and the first account; and
updating, by the server, a management permission of the second electronic device, and sending a fourteenth message to the second electronic device, wherein the fourteenth message indicates the second electronic device to cancel the binding relationship between the second electronic device and the first account.

17. The method according to claim 14, wherein after the sending, by the server, the first activation code to the first electronic device, the method further comprises:
receiving, by the server, a twenty-second message sent by the second electronic device, wherein the twenty-second message indicates to cancel a binding relationship between the second electronic device and an account stored on the second electronic device; and
updating, by the server, a management permission of the second electronic device, and sending a twenty-third message to the second electronic device, wherein the twenty-third message comprises unbinding success information.

18. A first electronic device, wherein a client is configured on the first electronic device, a first account is logged in to the client, and the first electronic device is configured to perform the method according to any one of claims 1 to 4 and claims 9 and 10.

19. A second electronic device, wherein n smart devices are registered with the second electronic device, the second electronic device and the n smart devices are located in one local area network, n is a positive integer greater than or equal to 1, and the second electronic device is configured to perform the method according to any one of claims 5 to 8 and claims 11 to 13.

20. The second electronic device according to claim 19, wherein the second electronic device is a gateway, or an electronic device integrated with a gateway function.

21. A server, wherein the server is configured to perform the method according to any one of claims 14 to 17.

22. A computer-readable storage medium, wherein the computer-readable storage medium stores a computer program, and when the computer program runs on a first electronic device, the first electronic device is enabled to perform the method according to any one of claims 1 to 4 and claims 9 and 10.

23. A computer-readable storage medium, wherein the computer-readable storage medium stores a computer program, and when the computer program runs on a second electronic device, the second electronic device is enabled to perform the method according to any one of claims 5 to 8 and claims 11 to 13.

24. A computer-readable storage medium, wherein the computer-readable storage medium stores a computer program, and when the computer program runs on a server, the server is enabled to perform the method according to any one of claims 14 to 17.
